Europäisches Patentamt

European Patent Office

Office européen des brevets

(19)

(11) **EP 0 986 737 B1**

(12) **FASCICULE DE BREVET EUROPEEN**

<table>
<tr><td>(45) Date de publication et mention<br>de la délivrance du brevet:<br>**24.09.2003 Bulletin 2003/39**</td><td>(51) Int Cl.<sup>7</sup>: $G01D\ 5/353$</td></tr>
</table>

(45) Date de publication et mention
de la délivrance du brevet:
**24.09.2003 Bulletin 2003/39**

(51) Int Cl.$^7$: **G01D 5/353**

(21) Numéro de dépôt: **98929472.3**

(22) Date de dépôt: **03.06.1998**

(86) Numéro de dépôt international:
**PCT/FR98/01118**

(87) Numéro de publication internationale:
**WO 98/055835 (10.12.1998 Gazette 1998/49)**

(54) **DISPOSITIF DE LECTURE DES RAIES SPECTRALES CONTENUES DANS UN SPECTRE OPTIQUE**

EINRICHTUNG ZUM LESEN VON SPEKTRALLINIEN IN EINEM OPTISCHEN SPEKTRUM

DEVICE FOR READING SPECTRAL RAYS CONTAINED IN AN OPTICAL SPECTRUM

(84) Etats contractants désignés:
**DE GB IT**

(30) Priorité: **04.06.1997 FR 9706871**

(43) Date de publication de la demande:
**22.03.2000 Bulletin 2000/12**

(73) Titulaire: **COMMISSARIAT A L'ENERGIE ATOMIQUE**
**75015 Paris (FR)**

(72) Inventeurs:
- **MAGNE, Sylvain**
  **F-92320 Châtillon (FR)**
- **FERDINAND, Pierre**
  **F-78800 Houilles (FR)**
- **GRAND, Gilles**
  **F-38000 Grenoble (FR)**

(74) Mandataire: **Audier, Philippe André et al**
**Brevatome,**
**3, rue du Docteur Lancereaux**
**75008 Paris (FR)**

(56) Documents cités:
**US-A- 5 426 297**

- **DAVIS M A ET AL: "MATCHED-FILTER INTERROGATION TECHNIQUE FOR FIBRE BRAGG GRATING ARRAYS" ELECTRONICS LETTERS, vol. 31, no. 10, 11 mai 1995, page 822/823 XP000518312**
- **KOO K P ET AL: "FIBRE LASER SENSOR WITH ULTRAHIGH STRAIN RESOLUTION USING INTERFEROMETRIC INTERROGATION" ELECTRONICS LETTERS, vol. 31, no. 14, 6 juillet 1995, pages 1180-1182, XP000525336**

**Description**

**DOMAINE TECHNIQUE**

La présente invention concerne un dispositif de lecture des raies spectrales contenues dans un spectre optique.

Elle trouve des applications notamment dans le domaine des communications optiques.

L'invention s'applique plus particulièrement aux réseaux (« networks ») de capteurs à fibres optiques.

Ces derniers comprennent notamment les réseaux de capteurs de déformations à fibres optiques et bien souvent, des réseaux de Bragg (« *Bragg gratings* ») photo-inscrits constituant les composants transducteurs de déformation (voire de pression ou de température).

L'une des premières architectures de réseaux à avoir été publiée utilise une source optique d'une largeur spectrale plus grande que la bande spectrale contenant les spectres des réseaux de Bragg et analyse séquentiellement les longueurs d'onde réfléchies par les différents capteurs (démultiplexage en longueur d'onde puis analyse spectrale des différents signaux).

A ce sujet, on se reportera aux documents (1) à (4) qui, comme les autres documents cités par la suite, sont mentionnés à la fin de la présente description.

De tels réseaux de capteurs sont utilisables pour la surveillance de structures dans les domaines suivants : bâtiment, travaux publics, transports, aéronautique et aérospatial.

**ÉTAT DE LA TECHNIQUE ANTÉRIEURE**

On connaît quatre techniques pour réaliser un démultiplexage en optique intégrée : une première technique utilisant un réseau (« grating ») gravé, une deuxième technique utilisant des interféromètres de Mach-Zehnder, une troisième technique utilisant un réseau de micro-guides ou PHASAR (pour PHASe-ARray), et une quatrième technique utilisant des interféromètres de Mach-Zehnder équilibrés ou des coupleurs 100% avec un réseau de Bragg photo-inscrit de façon identique sur les deux bras (« ADD-DROP multiplexer »).

La première technique exploite la diffraction de la lumière par un réseau (« grating ») concave (à champ de sortie circulaire ou plan) gravé et blazé à un ordre élevé.

La gravure verticale est possible dans le cas de guides en silice sur silicium et peut atteindre une profondeur de 25 $\mu$m.

A ce sujet, on consultera le document (6).

Le composant démultiplexeur consiste alors en une fibre d'entrée connectée à un guide planaire envoyant la lumière en direction d'un réseau de diffraction gravé.

Dans le cas du réseau à champ de sortie circulaire, la lumière incidente et la lumière diffractée, refocalisée à différentes incidences angulaires, sont localisées sur le cercle de Rowland.

Dans le cas du réseau à champ plan (voir le document (6)), les points stigmatiques dispersés en longueur d'onde sont alignés sur une droite orthogonale au faisceau réfléchi.

Comme le réseau fonctionne par réflexion, il est métallisé.

Le profil de gravure du réseau peut être constitué d'un ensemble d'ellipses comme l'enseigne le document (7).

Le faisceau diffracté est refocalisé sur des guides monomodes ayant par exemple un diamètre de mode de 9 $\mu$m et un espacement de 16 $\mu$m, comme l'enseigne le document (6), ou sur des photodiodes formant une barrette comme l'enseigne le document (5).

Le réseau fonctionne de préférence à un ordre de diffraction élevé (allant de 4 dans le document (6) à 50 dans le document (5)) dans l'intention de réaliser un démultiplexage à haute densité (pour les télécommunications).

La deuxième technique est fondée sur la mise en série de plusieurs interféromètres de type Mach-Zehnder qui sont tous déséquilibrés au niveau de leurs chemins optiques, avec une valeur caractéristique de déséquilibre.

A ce sujet, on consultera le document (8).

Pour un démultiplexeur à quatre voies, on utilise par exemple deux interféromètres, dont les déséquilibres valent respectivement $\Delta L_1$ et $\Delta L_2 = \Delta L_1 + \lambda/_{4N}$, et un troisième interféromètre dont le déséquilibre $\Delta L_3$ vaut $2.\Delta L_1$ (typiquement de l'ordre de 50 $\mu$m à 100 $\mu$m) afin d'obtenir une séparation entre canaux de 7,5 nm à 1550 nm, N étant l'indice effectif du mode.

La troisième technique utilise un réseau de phase optique (« optical phase-array ») qui est constitué d'un ensemble de guides déphaseurs monomodes parallèles reliant deux guides plans d'entrée et de sortie par des interfaces circulaires.

A ce sujet, on consultera le document (9).

Aux autres interfaces circulaires des guides plans sont reliés des guides d'entrée et des guides de sortie.

La lumière injectée par l'un quelconque des guides d'entrée s'étend dans le guide plan d'entrée et couvre l'ensemble des guides déphaseurs situés à l'interface.

D'un guide déphaseur à un autre, il existe une différence de longueur constante de sorte que les faisceaux lumineux émergeant du guide plan de sortie interfèrent comme s'ils étaient réfléchis par un réseau de diffraction concave incliné.

Le décalage de chemin optique induit par les guides déphaseurs produit le même effet qu'une inclinaison du front d'onde par rapport à l'interface.

Le PHASAR, qui fonctionne par transmission, se comporte ainsi comme un réseau de diffraction concave d'ordre très élevé (environ 50 à 100) et de grande capacité de multiplexage.

A ce sujet, on consultera le document (10).

Plus grand est le nombre de guides déphaseurs, meilleure est la résolution spectrale.

Par exemple, dans le document (11), 60 guides déphaseurs sont utilisés.

Afin d'annuler la dépendance en polarisation de ce circuit, une solution possible est d'insérer une lame demi-onde au milieu du circuit optique formé par les guides déphaseurs.

La quatrième technique utilise des interféromètres de Mach-Zehnder équilibrés ou des coupleurs 100% avec un réseau de Bragg photo-inscrit de façon identique sur les deux bras. La lumière est injectée au port 1 et émise au port 3 (100% de couplage) pour toutes les longueurs d'onde distinctes de la longueur d'onde de Bragg ; la lumière à la longueur d'onde de Bragg est réfléchie sélectivement au port 2. A ce sujet, on consultera par exemple le document (29) d'où sont tirées les références de la description de la quatrième technique, faite dans le présent paragraphe.

Trois sortes de matériaux sont utilisées pour réaliser les composants utilisés dans les quatre techniques précédentes : verre, silice sur silicium et semi-conducteurs de type InP.

En particulier, des réseaux gravés et des PHASARs ont été réalisés en optique intégrée sur du silicium tandis que des démultiplexeurs à interféromètres ont été réalisés en optique intégrée sur du silicium ou sur du verre.

Les composants par lesquels ces quatre techniques connues sont mises en oeuvre ne sont que des démultiplexeurs qui ne servent qu'à séparer différentes contributions spectrales.

Ces composants ne permettent pas de déterminer directement les longueurs d'onde de Bragg avec la précision souhaitée.

En outre, ces techniques nécessitent un compromis entre diaphonie (« cross talk ») et espace spectral occupé.

La diaphonie, c'est-à-dire le couplage lumineux entre les sorties, doit être minimisée car elle contribue à fausser les mesures de longueur d'onde.

Typiquement, une diaphonie de -25 dB à -30 dB est recherchée et l'occupation spectrale est déduite en conséquence.

Dans le cas d'un réseau de diffraction en optique intégrée sur silicium, le couplage lumineux entre les sorties est induit par la diffusion dans le guide (à cause des imperfections de gravure) et par le couplage entre les guides de sortie lorsque ceux-ci sont trop rapprochés.

Entre les centres de deux canaux spectraux adjacents, la diaphonie est typiquement de l'ordre de -20 dB à -35 dB tandis qu'elle n'est plus que de -10 dB à -15 dB à l'intersection des fonctions de transfert correspondant à ces canaux (à la moitié de la période spectrale).

Dans ce cas, un espace spectral inoccupé par un transducteur est donc nécessaire afin de garantir le minimum de diaphonie nécessaire.

Typiquement, cette diaphonie est atteinte avec une occupation spectrale de l'ordre de 0,8 nm sur 2 nm de période (voir les documents (5) et (6)).

Les caractéristiques de diaphonie et d'espace occupé du PHASAR et du réseau gravé sont équivalentes.

Typiquement, une diaphonie meilleure que -30 dB est atteinte dans le cas du document (11), pour une occupation spectrale de 0,8 nm et une période de 2 nm, avec 60 guides déphaseurs et un ordre de diffraction égal à 60.

Dans le cas des interféromètres de Mach-Zehnder, la diaphonie dépend de la précision d'ajustement des coupleurs de séparation (coupleurs 3 dB).

A titre d'exemple, dans le document (8) est décrit un démultiplexeur qui est constitué de trois interféromètres formés à partir de coupleurs 3,1 dB (au lieu de coupleurs 3 dB) et qui est caractérisé par une diaphonie d'environ -20 dB.

Dans le document (4) est également proposé un démultiplexeur qui inclut un dispositif de collimation de la lumière à analyser et une série de filtres passe-bande montés en cascade et associés à des photodétecteurs.

Le principal inconvénient de ce démultiplexeur est d'être conçu pour fonctionner en espace libre.

De ce fait, la reproductibilité et la fiabilité des mesures ainsi que la robustesse et l'intégration de ce démultiplexeur sont insuffisantes pour une application aux micro-systèmes.

De plus, la diaphonie minimale qu'il est possible d'obtenir avec ce démultiplexeur dépend de la réflexion des filtres passe-bande utilisés (qui comportent typiquement des dépôts anti-reflets de -20 dB) et dépend aussi fortement de la polarisation de la lumière analysée (les filtres sont orientés à 45°).

Enfin, un tel démultiplexeur ne se prête pas à une fabrication en série compatible avec les besoins du marché des capteurs industriels.

## EXPOSÉ DE L'INVENTION

La présente invention propose un dispositif (de préférence intégré) de lecture des raies spectrales contenues dans un spectre optique, ce dispositif comprenant des dispositifs de démultiplexage et de mesure (de préférence intégrés) et ayant un faible temps de réponse (une grande bande passante en fréquence) ainsi qu'un coût et une « flexibilité » de fabrication optimisés.

Ce dispositif de lecture permet alors de concevoir des micro-systèmes de mesure de déformations qui fonctionnent en temps réel, dans un large domaine de fréquences s'étendant jusqu'aux fréquences ultrasonores.

Le principe de fonctionnement de ce dispositif de lecture exploite des techniques développées pour les télécommunications optiques mais, contrairement à ce qui est fait dans ce dernier domaine, la présente invention utilise non seulement le démultiplexage de différents canaux (correspondant par exemple à différents capteurs) mais permet aussi la mesure des longueurs d'onde correspondant à ces canaux.

La présente invention résout le problème de la conception d'un dispositif de lecture de raies spectrales

- qui est susceptible d'avoir une grande capacité de multiplexage pour permettre l'observation simultanée d'un grand nombre de transducteurs, typiquement 8 ou plus, avec un très faible couplage lumineux (diaphonie) entre ses sorties, typiquement de l'ordre de -25 dB à -30 dB,
- qui est susceptible d'avoir une grande bande passante en fréquence, de l'ordre de 100 kHz par exemple,
- qui est susceptible d'être intégré sur un substrat planaire,
- qui a une grande flexibilité de fabrication (car il permet l'ajustement des longueurs d'onde d'accord).

De façon précise, la présente invention a pour objet un dispositif de lecture de raies spectrales qui sont contenues dans un spectre optique et sont susceptibles de fluctuer respectivement dans des domaines spectraux déterminés, ce dispositif étant caractérisé en ce qu'il comprend :

- un dispositif de démultiplexage en longueur d'onde de ces raies spectrales, ce dispositif de démultiplexage ayant une entrée destinée à recevoir le spectre optique et des sorties destinées à fournir respectivement les raies spectrales démultiplexées,
- un dispositif de mesure, par filtrage, des longueurs d'onde respectives des raies spectrales démultiplexées, comprenant, pour chacune de ces raies, une voie de mesure munie d'un filtre et une voie de référence, et
- des moyens de photodétection, pour chaque raie spectrale, des intensités lumineuses respectivement transmises par les voies de mesure et de référence correspondantes, de manière à pouvoir déterminer la longueur d'onde de cette raie en calculant le rapport des intensités ainsi détectées.

Le dispositif objet de l'invention est ainsi un dispositif optique susceptible d'être intégré sur un substrat planaire permettant d'obtenir un ensemble de signaux électriques représentatifs des longueurs d'onde des raies spectrales (chacune de ces raies étant suffisamment séparée des raies spectrales adjacentes).

Ces raies spectrales peuvent par exemple provenir des réflexions de réseaux de Bragg transducteurs photo-inscrits sur une fibre optique monomode sensible, soumise à des contraintes ou à des variations de température et de pression.

Plus généralement, ces raies peuvent provenir de transducteurs qui engendrent des raies spectrales dont on cherche à déterminer les positions.

L'originalité du dispositif objet de l'invention réside notamment dans le fait qu'il incorpore (de préférence sur un même substrat) une partie de démultiplexage et une partie de filtrage-mesure.

Le dispositif de démultiplexage en longueur d'onde peut être un dispositif de démultiplexage à réseau gravé ou à réseau de micro-guides (ou PHASAR, déjà considéré plus haut).

Cependant, selon un mode de réalisation préféré du dispositif objet de l'invention, le dispositif démultiplexage comprend :

- un séparateur en énergie, ayant une entrée, qui est destinée à recevoir le spectre optique, et une pluralité de sorties qui sont aptes à fournir respectivement des fractions de l'énergie lumineuse du spectre optique, et
- une pluralité de réflecteurs de lumière sélectifs en longueur d'onde qui sont respectivement reliés aux sorties, chaque réflecteur de lumière sélectif en longueur d'onde ayant une bande passante en longueur d'onde qui contient le domaine spectral associé à l'une des raies et réfléchissant donc seulement cette raie, chaque réflecteur sélectif étant relié à un guide d'onde optique destiné à propager la raie réfléchie par ce réflecteur.

On peut utiliser un séparateur en énergie de type connu par exemple du genre de ceux qui sont commercialisés par la société Corning. Ce séparateur en énergie peut être un ensemble de jonctions séparatrices montées en cascade, c'est-à-dire en arbre (leur montage est arborescent).

Chaque jonction séparatrice peut être multimode mais elle est de préférence monomode notamment lorsque le spectre optique devant être démultiplexé est transporté par une fibre optique monomode, reliée à l'entrée du dispositif.

Ces jonctions séparatrices peuvent être des coupleurs par exemple des coupleurs 3 dB (coupleurs qui sont tels que chacune de leurs deux voies de sorties transporte la moitié de l'énergie lumineuse incidente).

Cependant cela nécessite d'ajuster précisément la longueur de couplage ainsi que l'intervalle entre les deux guides couplés de tels coupleurs en fonction de la longueur d'onde.

C'est pourquoi, dans la présente invention, il est préférable d'utiliser des jonctions séparatrices constituées par des jonctions Y.

Ces jonctions Y présentent l'avantage d'être achromatiques et indépendantes de la polarisation.

Un avantage du mode de réalisation préféré du dispositif objet de l'invention réside dans l'excellente réjection en longueur d'onde, qui assure une très faible diaphonie (profil spectral de réflexion en créneau) ainsi que dans la très grande « flexibilité » de fabrication.

Par rapport au dispositif décrit dans le document (4), le dispositif objet de l'invention présente l'avantage de n'utiliser aucun dispositif de collimation et il permet l'intégration de tous ses composants de base (filtres, séparateurs, ...), la lumière restant guidée en tout point du dispositif.

Celui-ci permet ainsi de résoudre les problèmes posés plus haut, à savoir atteindre une grande capacité de multiplexage à très faible couplage lumineux entre sorties (très faible diaphonie) avec une grande bande passante en fréquence, tout en assurant un coût, une intégration, une robustesse et une flexibilité de fabrication (ajustement en longueur d'onde) compatibles avec les besoins du marché de l'instrumentation et des capteurs.

Dans le mode de réalisation préféré du dispositif objet de l'invention, les réflecteurs sélectifs peuvent comprendre des réseaux de Bragg (« Bragg gratings »). Ces réseaux de Bragg peuvent être photo-inscrits ou photo-gravés.

De plus, ces réseaux de Bragg peuvent être des réseaux à périodes variables (« chirped gratings »).

On peut également utiliser des réseaux à période fixe et de réflectivité maximale (« saturée ») que l'on obtient par exemple par photo-inscription sous une très forte fluence (de façon à élargir leur réponse spectrale).

Les filtres respectivement associés aux voies de mesure peuvent être des réseaux de Bragg à période variable ou des filtres à multicouches diélectriques différents les uns des autres ou des filtres à multicouches diélectriques identiques les uns aux autres ou des interféromètres de Mach-Zehnder.

Le dispositif de démultiplexage et le dispositif de mesure par filtrage peuvent être respectivement intégrés sur deux substrats qui sont reliés par l'intermédiaire de fibres optiques destinées à transmettre les raies démultiplexées depuis le dispositif de démultiplexage jusqu'au dispositif de mesure par filtrage.

Ces deux substrats peuvent être en verre ou en silicium, ou encore en semi-conducteur III-V (comme par exemple AsGa ou InP).

Cependant, le dispositif de démultiplexage et le dispositif de mesure par filtrage sont de préférence intégré sur un même substrat, qui peut être en verre ou en silicium, ou encore en semi-conducteur III-V.

Selon un mode de réalisation préféré de l'invention, qui est très intégré, le dispositif de démultiplexage, le dispositif de mesure par filtrage et les moyens de photodétection des raies spectrales sont intégrés sur un même substrat en silicium ou en semi-conducteur III-V.

Le dispositif objet de l'invention peut comprendre en outre une fibre optique qui est optiquement couplée à l'entrée du dispositif de démultiplexage et qui est destinée à amener le spectre optique à cette entrée.

**BRÈVE DESCRIPTION DES DESSINS**

La présente invention sera mieux comprise à la lecture de la description d'exemples de réalisation donnés ci-après, à titre purement indicatif et nullement limitatif, en faisant référence aux dessins annexés sur lesquels :

- les figures 1A à 1D sont des vues de dessus schématiques de modes de réalisation particuliers du dispositif objet de l'invention, utilisant un même dispositif de démultiplexage à réseaux de Bragg, les figures 1B à 1D ne montrant que partiellement ce dispositif de démultiplexage,
- les figures 2A à 2D sont des vues de dessus schématiques de modes de réalisation particuliers du dispositif objet de l'invention, utilisant un même dispositif de démultiplexage à réseaux gravé, les figures 2B à 2D ne montrant que partiellement ce dispositif de démultiplexage,
- les figures 3A à 3D sont des vues de dessus schématiques de modes de réalisation particuliers du dispositif objet de l'invention, utilisant un même dispositif de démultiplexage à réseau de phase, les figures 3B à 3D ne montrant que partiellement ce dispositif de démultiplexage,

- la figure 4 illustre schématiquement le principe utilisé dans la présente invention pour la détermination d'une longueur d'onde au moyen d'un filtre optique,
- la figure 5 représente la réponse spectrale de ce filtre, comprenant une partie linéaire,
- les figures 6A à 6D représentent les réponses spectrales de divers filtres utilisables dans la présente invention,
- la figure 7 illustre schématiquement le principe du démultiplexage spectral utilisé dans l'invention,
- la figure 8 représente un abaque-type de démultiplexage spectral,
- la figure 9 est une vue de dessus schématique d'un autre mode de réalisation particulier du dispositif objet de l'invention,
- la figure 10 est une vue schématique d'un micro-système de mesure de déformations ou de températures, utilisant un dispositif conforme à l'invention, et
- les figures 11 et 12 illustrent schématiquement deux possibilités de démultiplexage.

## EXPOSÉ DÉTAILLÉ DE MODES DE RÉALISATION PARTICULIERS

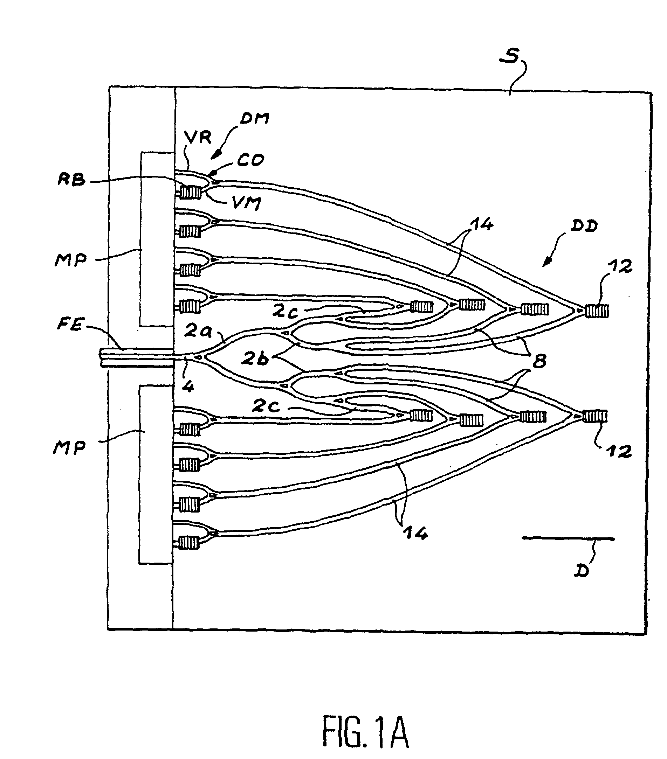

On considère dans ce qui suit douze modes de réalisation particuliers du dispositif objet de l'invention, qui sont schématiquement représentés en vue de dessus sur les figures 1A à 3D.

Chacun de ces modes de réalisation est destiné à la détermination des longueurs d'onde d'une pluralité de raies spectrales, par exemple huit raies spectrales, qui forment un spectre optique et sont susceptibles de fluctuer respectivement dans des domaines spectraux déterminés.

Chacun de ces modes de réalisation particuliers comprend :

- un dispositif DD de démultiplexage en longueur d'onde de ces raies spectrales, ce dispositif de démultiplexage ayant une entrée destinée à recevoir le spectre optique et des sorties destinées à fournir respectivement les raies spectrales démultiplexées,
- un dispositif DM de mesure, par filtrage, des longueurs d'onde respectives des raies spectrales démultiplexées, comprenant, pour chacune de ces raies, une voie de mesure VM munie d'un filtre et une voie de référence VR,
- des moyens de photodétection MP, pour chaque raie spectrale, des intensités lumineuses respectivement transmises par les voies de mesure et de référence correspondantes, et
- une fibre optique externe FE qui transporte la lumière contenant les différentes raies spectrales et qui est optiquement couplée à l'entrée du dispositif DD.

Avantageusement, les dispositifs DD et DM sont intégrés sur un même substrat S.

Le dispositif de démultiplexage DD peut être formé par :

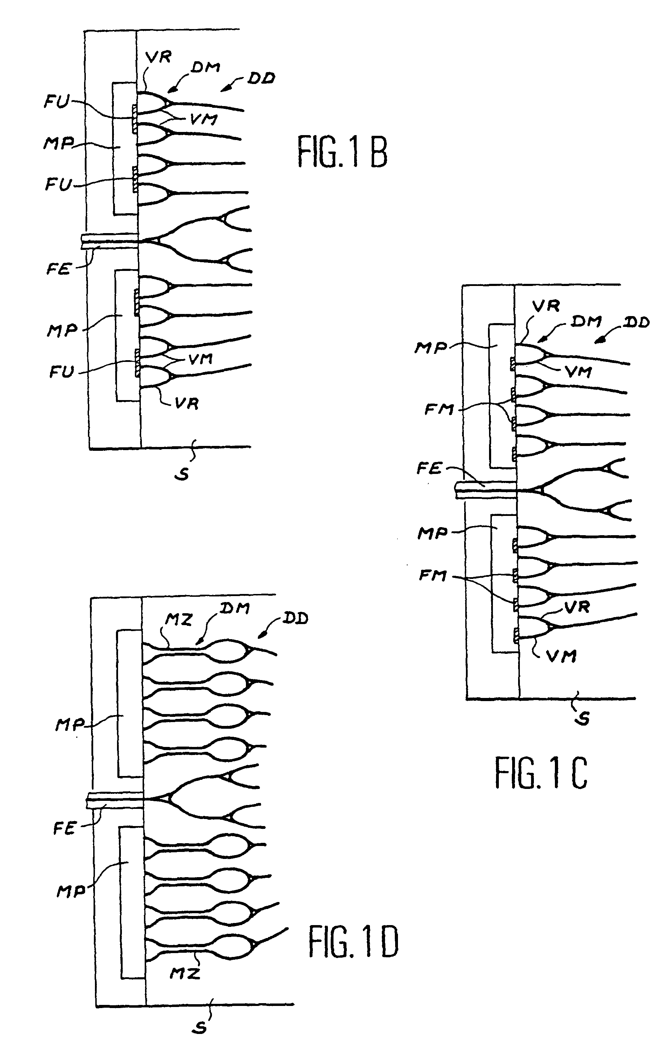

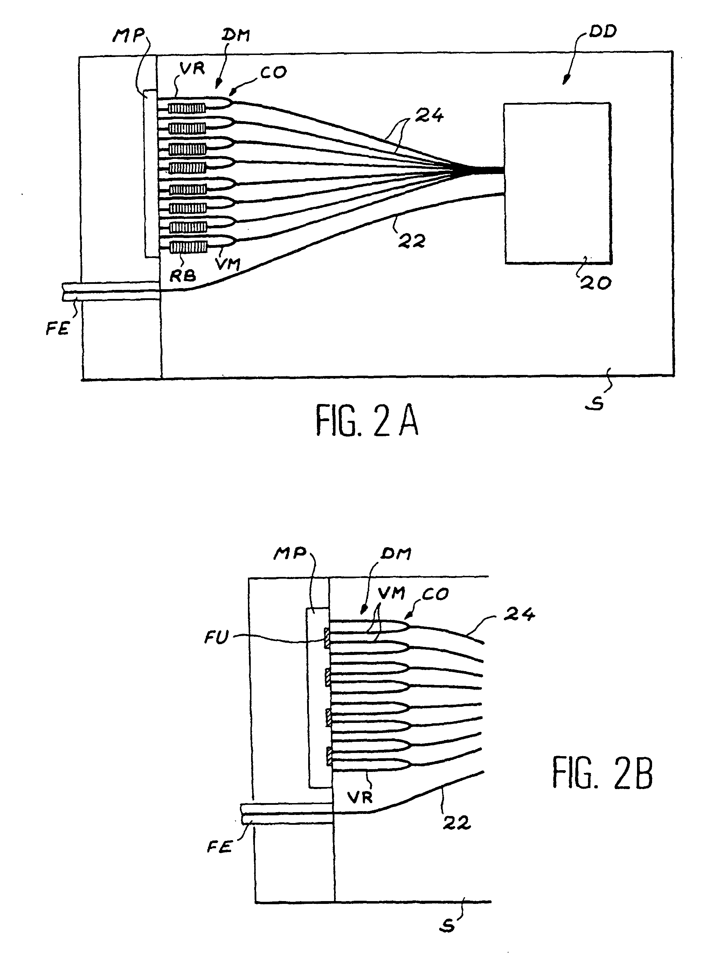

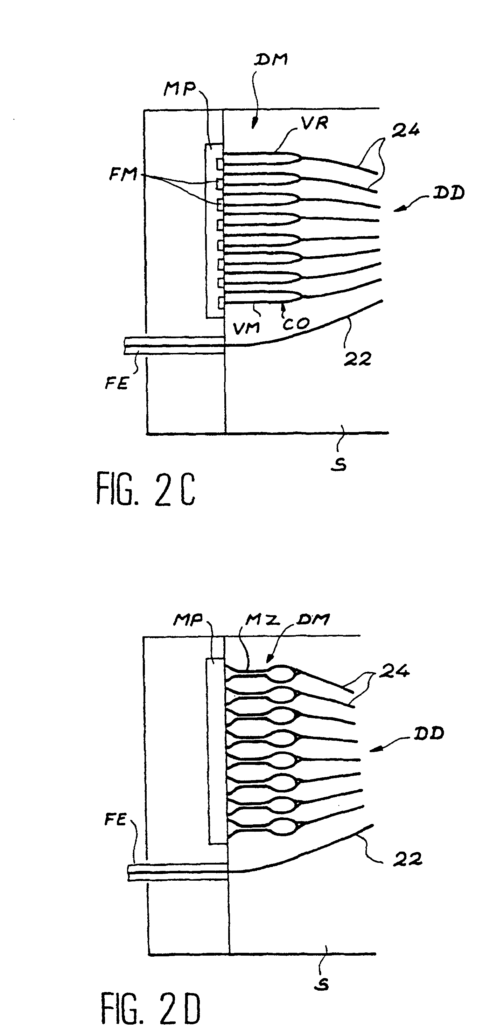

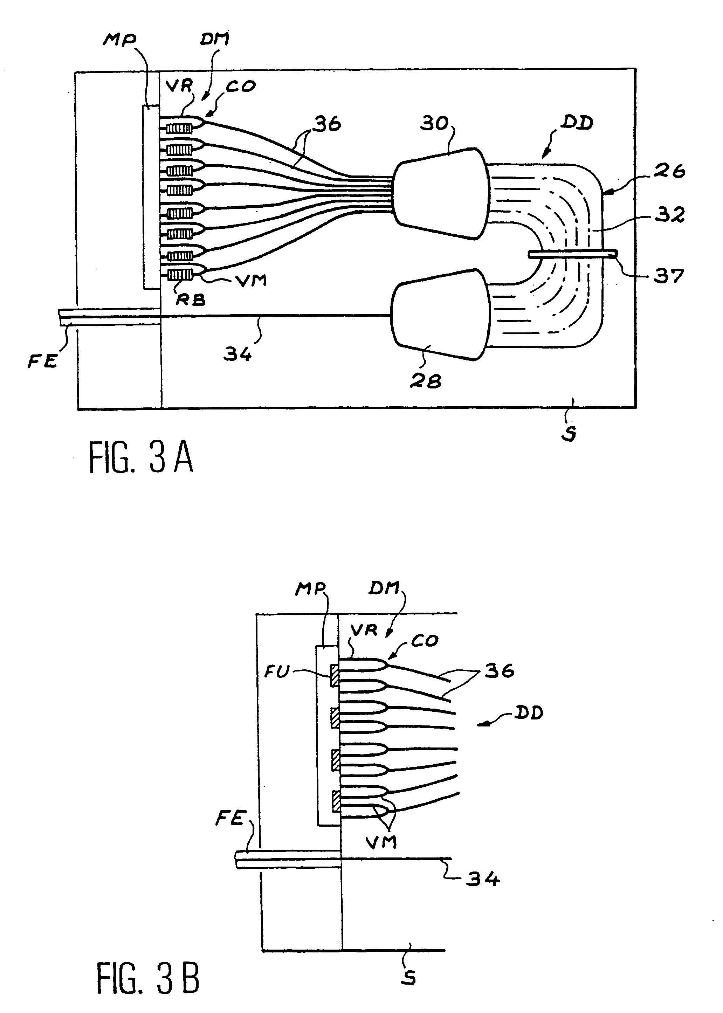

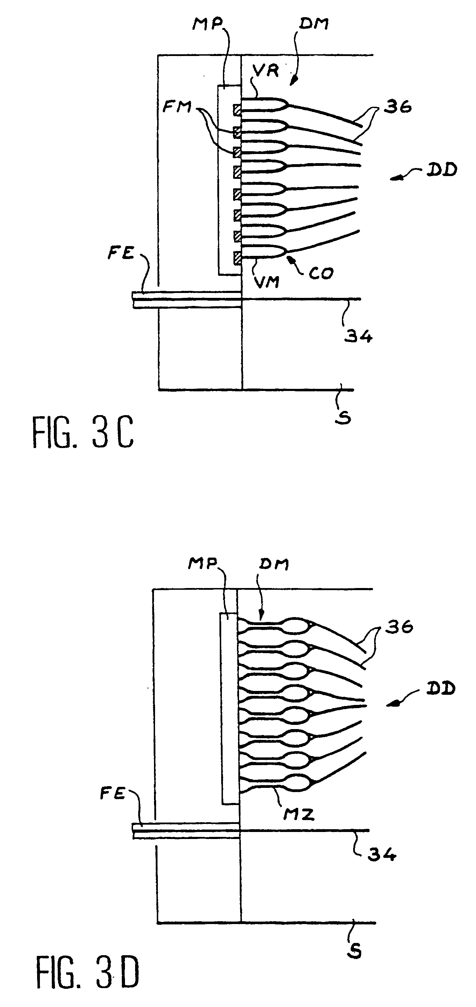

- une succession de jonctions Y monomodes associées à des réseaux de Bragg (figures 1A, 1B, 1C, 1D) ou
- un réseau gravé (figures 2A, 2B, 2C, 2D) ou
- un PHASAR (figures 3A, 3B, 3C, 3D)

d'où trois modes de réalisation particuliers.

Le dispositif de mesure par filtrage DM peut comprendre :

- des réseaux de Bragg à période variable associés chacun à une voie de mesure (figures 1A, 2A, 3A) ou
- des filtres à multicouches diélectriques qui sont identiques pour toutes les voies de mesure (figures 1B, 2B, 3B) ou
- des filtres à multicouches diélectriques qui sont différents les uns des autres (figures 1C, 2C, 3C) ou
- des interféromètres de Mach-Zehnder (figures 1D, 2D, 3D),

d'où quatre modes de réalisation particuliers.

On retrouvé donc bien, au total, les 3x4=12 modes de réalisation particuliers du dispositif objet de l'invention.

Trois technologies de fabrication utilisables sont la technologie d'optique intégrée sur verre, la technologie d'optique intégrée sur silicium et la technologie des semi-conducteurs III-V (AsGa pour les longueurs d'onde proches de 0,8 $\mu$m et InP pour les longueurs d'onde proches de 1,3 $\mu$m).

Ces trois technologies sont intéressantes car elles se prêtent bien à un procédé de fabrication de petite ou moyenne série et les substrats peuvent être rendus photosensibles (verre, silicium) ou photogravés (semi-conducteur III-V).

Les dispositifs des figures 1A à 3D peuvent être réalisés dans toutes les technologies à l'exception des figures 2A à 2D qui ne sont pas applicables à la technologie d'optique intégrée surverre.

Avantageusement, tous les guides diélectriques que comprennent les dispositifs des figures 1A à 3D sont monomodes pour le spectre d'excitation optique.

La fibre externe FE est soudée ou connectée à un circuit optique non représenté qui incorpore une ou plusieurs fibres optiques sensibles.

Elle constitue ainsi l'interface optique avec le milieu extérieur (accessible par l'utilisateur final).

Avantageusement, cette fibre optique FE est monomode à la longueur d'onde d'utilisation (typiquement 1300 nm, 1550 nm ou encore 820 nm).

La liaison fibre-guide d'entrée du dispositif DD peut être assurée par la technique des rainures (« V-groove »).

A ce sujet, on se reportera aux documents (15), (16), (18) et (19).

La connexion de fibre au guide se fait généralement par soudage laser.

Cette opération est réalisée par certaines sociétés comme la société Newport Co.

Avantageusement, les moyens de photodétection MP sont formés par un ensemble de photodiodes ou une barrette de photodiodes.

Des barrettes telles que celles qui sont commercialisées par la société Centronics peuvent être utilisées.

Une forte bande passante en fréquence (100 kHz) peut être atteinte en faisant fonctionner les photodiodes en régime photoconducteur et en les insérant dans un montage électronique de type transimpédance par exemple.

Alternativement, dans le cas d'une technologie d'optique intégrée sur silicium, les photodiodes peuvent être directement incorporées au circuit.

A ce sujet, on se reportera aux documents (15) et (16).

Comme on l'a vu, la fibre optique FE sert d'interface avec la ou les fibres de mesure de l'utilisateur.

Un exemple de fibre de mesure est une fibre sensible sur laquelle ont été photo-inscrits des réseaux de Bragg transducteurs (contraintes, température).

A ce sujet, on se reportera aux documents (1), (2) et (3).

D'après ces documents, l'équation de comportement spectral d'un réseau de Bragg inscrit dans une fibre en germanosilicate standard s'écrit :

$$\frac{\Delta\lambda}{\lambda} = 0{,}78\mathrm{x}\varepsilon + 7{,}4\mathrm{x}10^{-6}\mathrm{x}\Delta\mathrm{T} - 5{,}18\mathrm{x}10^{-6}\mathrm{x}\Delta\mathrm{P}$$

Dans cette formule, $\varepsilon$ représente une micro-déformation et $\Delta\mathrm{T}$ (en degrés) et $\Delta\mathrm{P}$ (en MPa) correspondent respectivement à l'écart de température et à l'écart de pression.

Pour tous les modes de réalisation nous considérons à titre d'exemple une gamme de mesure en déformation de 1000 $\mu\varepsilon$ (une micro-déformation ($\mu\varepsilon$) correspondant à un allongement relatif de 1 µm/m).

L'écart spectral correspondant est d'environ 1 nm à une longueur d'onde de travail de 1300 nm.

De même, pour une gamme de températures de 100°C, l'écart spectral induit par la température est de 1 nm.

La gamme de mesure correspondante est alors choisie égale à 3 nm pour chaque réseau de Bragg transducteur de mesure.

A titre d'exemple, tous les réseaux de Bragg transducteurs sont espacés chacun de 6 nm afin de garantir une diaphonie d'environ -30 dB.

Pour une source d'excitation d'environ 48 nm de largeur à mi-hauteur, cela correspond à un multiplexage de 8 transducteurs de Bragg sur la ligne de mesure.

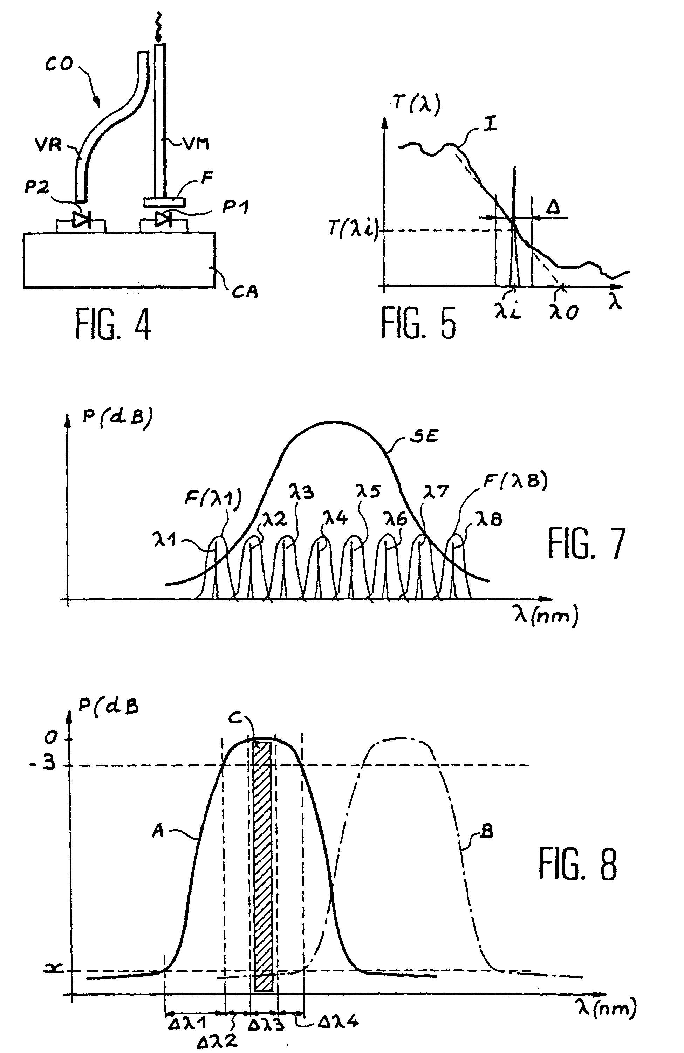

La technique de mesure des longueurs d'onde est expliquée ci-après en faisant référence aux figures 4 et 5.

Chaque raie spectrale démultiplexée est envoyée à la branche d'entrée d'un coupleur optique CO ayant deux branches de sortie qui constituent respectivement une voie de mesure VM et une voie de référence VR.

Il s'agit d'un coupleur optique dont le taux de séparation est stable (notamment en température).

La voie de référence comprend un filtre optique F (élément sélectif en longueur d'onde) de réponse connue et ayant une forte transition spectrale.

A ce sujet on consultera le document (30).

Le filtre F est suivi par un photodétecteur P1 qui fournit un signal électrique s1 représentatif de la lumière filtrée par ce filtre.

Un autre photodétecteur P2 est placé à la suite de la voie de référence et fournit un signal électrique s2 représentatif de la lumière transmise par celle-ci.

Pour des raisons de recouvrement de spectres et d'identification des transducteurs, il faut autant de paires de photodétecteurs qu'il y a de raies à observer (et donc typiquement, de transducteurs de Bragg sur la ligne de mesure).

Le rapport s1/s2 peut être déterminé électroniquement au moyen d'une carte analogique CA qui comprend un diviseur analogique (utilisant par exemple des amplificateurs logarithmiques et anti-logarithmiques) et un conformateur permettant de transformer ce signal en un signal proportionnel à la longueur d'onde recherchée.

Ce rapport peut aussi être déterminé numériquement par un ordinateur après conversion des signaux s1 et s2 sous forme numérique au moyen d'une carte d'acquisition analogique-numérique.

La raie spectrale d'un transducteur de Bragg est bien approximée par un profil gaussien centré sur une longueur d'onde $\lambda i$, que l'on veut mesurer, et de largeur caractéristique $\Delta\lambda$ (et donc de largeur à mi-hauteur $2.(\ln 2)^{1/2}.\Delta\lambda$).

Si, pour une longueur d'onde $\lambda$ proche de $\lambda i$, la transmission du filtre s'écrit $A.(\lambda-\lambda 0)$, la relation liant la longueur d'onde centrale $\lambda i$ de la raie au rapport s1/s2 mesuré s'écrit :

$$ s1 \; / \; s2 \; = \; T(\lambda i) \; = \; A\left[ \lambda i \; - \; \lambda 0 \; + \; \frac{\Delta\lambda}{2.\sqrt{\pi}} \right] $$

où A et $\lambda 0$ sont deux paramètres caractéristiques du filtre.

On voit donc que l'on peut calculer $\lambda i$ à partir de s1/s2.

La figure 5 représente les variations de la transmission $T(\lambda)$ du filtre, exprimée par exemple en pourcentage, en fonction de la longueur d'onde $\lambda$.

On a représenté la largeur spectrale $\Delta$ à l'intérieur de laquelle la raie $\lambda i$ peut varier.

La partie rectiligne I de $T(\lambda)$ est sensiblement contenue dans une droite qui a pour pente A et coupe l'axe des $\lambda$ en $\lambda 0$.

On détaille ci-après le principe du filtrage spectral pour chacun des quatre types de filtres utilisables pour le dispositif de mesure par filtrage.

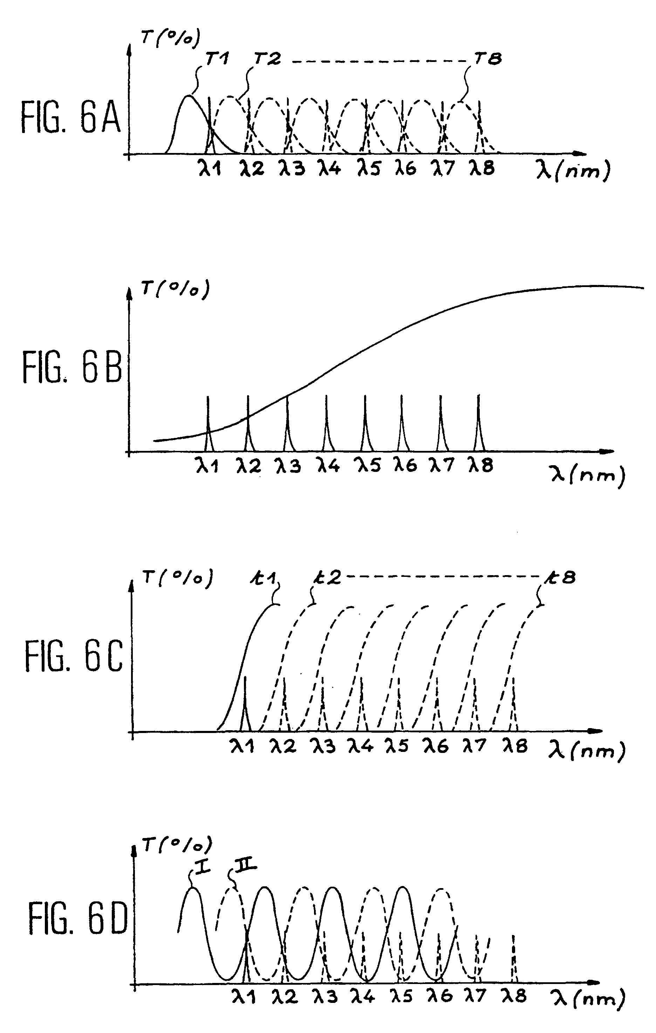

On se reportera aux figures 6A, 6B, 6C et 6D qui correspondent respectivement à l'utilisation de réseaux de Bragg à périodes variables, à l'utilisation de filtres à multicouches diélectriques identiques pour toutes les voies de mesure, à l'utilisation de filtres à multicouches diélectriques différents pour les voies de mesure et à l'utilisation d'interféromètres de Mach-Zehnder.

Sur les figures 6A à 6D, on a représenté les variations des diverses réponses spectrales T (exprimées en %) en fonction de la longueur d'onde $\lambda$ (exprimée en nanomètres).

On voit également sur ces figures 6A à 6D le spectre des réseaux de Bragg transducteurs, qui comprend les huit raies spectrales dont les longueurs d'onde centrales sont respectivement notées $\lambda 1$ à $\lambda 8$.

On voit sur la figure 6A les réponses spectrales respectives des huit réseaux de Bragg de mesure qui sont respectivement notées T1 à T8 et correspondent respectivement aux raies spectrales $\lambda 1$ à $\lambda 8$ que l'on veut déterminer.

Ces réseaux de Bragg de mesure ont chacun une réponse spectrale linéaire autour de la longueur d'onde du réseau de Bragg transducteur correspondant.

On voit sur la figure 6B la réponse spectrale TS commune à tous les filtres à multicouches diélectriques identiques (filtres passe-haut dans l'exemple représenté).

On voit sur la figure 6C les réponses spectrales respectives t1 à t8 des huit filtres à multicouches diélectriques différents, par exemple passe-haut, correspondant respectivement aux raies spectrales $\lambda 1$ à $\lambda 8$.

On voit sur la figure 6D la réponse spectrale I de l'interféromètre de Mach-Zehnder associé au transducteur fournissant la raie spectrale de longueur d'onde centrale $\lambda 1$.

On a représenté en pointillé la réponse spectrale II de l'interféromètre de Mach-Zehnder associé au transducteur fournissant la raie spectrale de longueur d'onde centrale $\lambda 2$.

Les autres réponses spectrales correspondant respectivement aux longueurs d'onde $\lambda 3$ à $\lambda 8$ ne sont pas représentées.

Ces interféromètres ont des périodes spectrales qui vont de quelques nanomètres à quelques dizaines de nanomètres.

Le dispositif de démultiplexage DD faisant partie des dispositifs des figures 1A à 1D comprend des jonctions séparatrices en énergie 2a, 2b, 2c qui sont montées en cascade.

L'ensemble de ces jonctions séparatrices possède une entrée 4, qui est couplée à la fibre FE, ainsi qu'une pluralité de sorties 8 qui sont aptes à fournir respectivement des fractions de l'énergie lumineuse du spectre optique.

Ces jonctions séparatrices sont choisies monomodes lorsque cette fibre FE est monomode.

Dans l'exemple représenté, étant donné que l'on veut séparer huit raies spectrales, on utilise sept jonctions séparatrices montées en cascade (voir le document (13), à savoir une jonction référencée 2a, deux jonctions référencées 2b et quatre jonctions référencées 2c.

On dispose ainsi de huit sorties 8 pour l'ensemble de ces jonctions séparatrices.

On utilise de préférence des jonctions Y en tant que jonctions séparatrices.

Une jonction Y est constituée d'un guide d'entrée et de deux guides de sortie faisant un angle (typiquement quelques degrés).

On voit sur les figures 1A à 1D que la branche d'entrée de la jonction 2a est optiquement couplée à la fibre optique FE et constitue l'entrée 4 de l'ensemble de jonctions.

Les deux branches de sortie de cette jonction 2a sont respectivement couplées aux branches d'entrée des deux jonctions 2b.

Chacune des branches de sortie de ces jonctions 2b est elle-même couplée à la branche d'entrée de l'une des quatre jonctions 2c.

Les huit branches sorties de ces jonctions 2c constituent les sorties 8 de l'ensemble de jonctions et sont respectivement couplées à huit réseaux de Bragg 12.

Chacun de ces réseaux de Bragg 12 forme un réflecteur de lumière sélectif en longueur d'onde.

Ce réflecteur de lumière a une bande passante en longueur d'onde qui contient le domaine spectral dans lequel l'une des huit raies spectrales est susceptible de fluctuer.

Ce réseau de Bragg réfléchit donc seulement cette raie.

Chacun des réseaux de Bragg 12 est non seulement couplé, d'un côté, à l'une des sorties de l'ensemble de jonctions 2a, 2b, 2c mais encore couplé, par le même côté, à un guide d'onde optique 14 qui est destiné à propager la lumière correspondant à la raie démultiplexée, réfléchie par ce réseau de Bragg.

Dans le cas des figures 1A, 1B et 1C, chaque guide d'onde 14 est couplé à la branche d'entrée du coupleur CO correspondant, faisant partie du dispositif de mesure DM.

Dans le cas de la figure 1A, la branche de sortie VM de ce coupleur porte un réseau de Bragg à période variable RB (servant de filtre).

Dans le cas de la figure 1B, les branches de sortie VM aboutissent à des filtres à multicouches diélectriques identiques FU, chaque filtre FU étant commun à deux branches VM adjacentes dans l'exemple représenté.

Dans le cas de la figure 1C, les branches de sortie VM aboutissent à des filtres à multicouches diélectriques FM différents les uns des autres.

Dans le cas de la figure 1D, chaque guide 14 est relié aux deux branches d'entrée de l'interféromètre de Mach-Zehnder correspondant MZ et les deux branches de sortie de celui-ci (comparables aux deux branches de sortie d'un coupleur CO) aboutissent respectivement aux deux photodiodes associées (non représentées) faisant partie des moyens MD.

Le substrat S est par exemple en verre ou en silicium pour des raisons de commodité de fabrication des jonctions en Y et des réseaux de Bragg.

On précise que les échelles verticale et horizontale des figures 1A à 1D sont différentes.

A titre purement indicatif et nullement limitatif, les réseaux de Bragg 12 s'étendent suivant une même direction D et la dimension des figures 1A à 1D suivant cette direction est de l'ordre de 70 millimètres tandis que, suivant une direction perpendiculaire à la précédente, la dimension est de l'ordre de 5 millimètres.

On précise que l'énergie lumineuse qui parvient à chaque jonction Y par la branche d'entrée de celle-ci se retrouve, pour moitié, dans l'une des branches de sortie de cette jonction et, pour moitié, dans l'autre branche de sortie.

En revanche, l'énergie lumineuse apparaissant dans une branche de sortie d'une jonction Y n'est qu'à moitié transmise à la branche d'entrée de la jonction suivante.

Le reste de cette énergie est transmise au substrat S.

A ce sujet, on se reportera au document (20).

Pour le démultiplexeur à huit voies de sortie des figures 1A à 1D, le pourcentage de l'énergie lumineuse incidente, qui est présent dans chaque guide d'onde optique 14 après réflexion par le réseau de Bragg de démultiplexage 12 correspondant est de l'ordre de 3% de cette énergie incidente, l'atténuation étant ainsi de l'ordre de -15 dB.

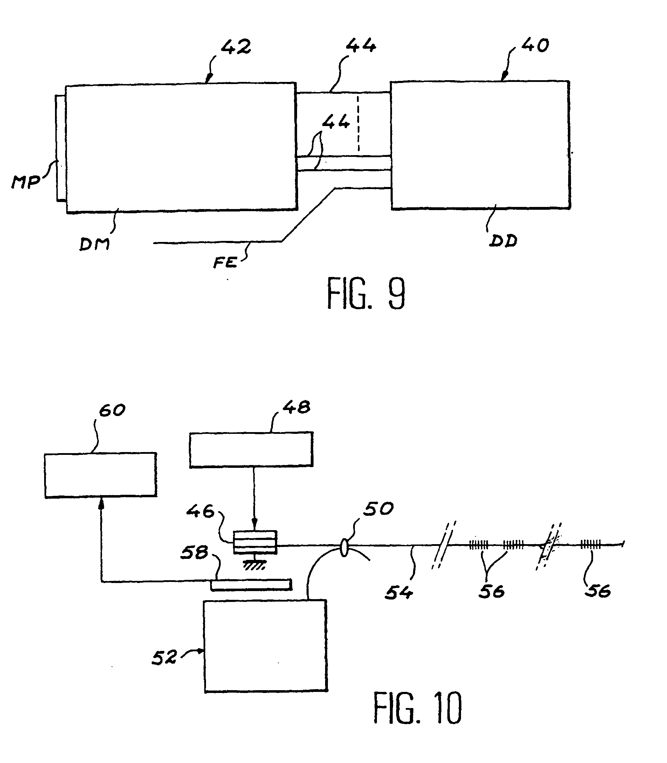

La figure 7 illustre schématiquement le principe de fonctionnement du dispositif de démultiplexage en longueur d'onde des figures 1A à 1D.

La lumière que l'on veut analyser contient les huit raies spectrales dont les longueurs d'onde sont respectivement notées $\lambda 1$ à $\lambda 8$ sur la figure 7.

La largeur spectrale de chacune de ces raies est par exemple de l'ordre de 0,1 nanomètre.

Sur la figure 7, les longueurs d'onde $\lambda$ sont portées en abscisses et exprimées en nanomètres tandis que les puissances lumineuses P sont portées en ordonnées et exprimées en dB.

La lumière que l'on veut démultiplexer est tout d'abord séparée de façon équilibrée, du point de vue de l'énergie lumineuse, par l'ensemble des jonctions Y.

A ce sujet on consultera le document (13).

Chacune des sorties de l'ensemble de jonctions Y aboutit à un réseau de Bragg de démultiplexage qui sert de réflecteur à large bande.

On voit sur la figure 7 les fonctions de transfert spectrale respectives $F(\lambda_i)$ des huit réseaux de Bragg (i=1 à 8), chacune contenant le domaine spectral d'évolution d'une raie (largeur spectrale de l'ordre de 0,1 nm) du spectre optique de l'énergie lumineuse incidente.

Par exemple, la largeur spectrale (à -3 dB) est de l'ordre de 3 nm pour chaque fonction de transfert.

On voit aussi le spectre d'excitation SE des réseaux de Bragg transducteurs, dont la largeur spectrale est de l'ordre de 50 nm.

L'intersection des domaines délimités par deux fonctions de transfert spectrales adjacentes est très faible.

Les réseaux de Bragg peuvent être photo-inscrits ou photo-gravés.

Dans le cas de l'utilisation d'une technique de photo-gravure ou de photo-inscription, ces réseaux peuvent être des réseaux à périodes variables (appelés « *chirped gratings* »).

Les réseaux à périodes variables peuvent être considérés comme un ensemble de réseaux de longueurs d'onde voisines qui sont mis en série.

Dans le cas de l'utilisation d'une technique de photo-inscription, les réseaux peuvent être photo-inscrits sous très forte fluence, afin de saturer leur réponse spectrale.

Dans le cas des figures 2A à 2D, le dispositif de démultiplexage est constitué par un démultiplexeur à réseau gravé déjà mentionnée plus haut (voir aussi les documents (5), (6) et (7)).

Dans l'exemple représenté, il s'agit d'un réseau de diffraction à champ plan 20 muni d'un guide d'entrée 22, qui est couplé à la fibre FE, et de guides de sortie 24 dont le nombre est égal à celui des raies spectrales (8 dans les exemples considérés).

Comme dans le cas des figures 1A à 1D, chaque guide de sortie 24 est raccordé au dispositif de mesure par filtrage DM et donc à un coupleur CO (cas des figures 2A à 2C) ou à un interféromètre MZ (cas de la figure 2D).

Dans le cas des figures 3A à 3D, le dispositif de démultiplexage est constitué par un démultiplexeur à réseau de micro-guides ou PHASAR 26 déjà mentionné plus haut (voir aussi les documents (9), (10) et (11)).

Dans l'exemple représenté, il s'agit d'un PHASAR 1xN, avec N=8, puisqu'on a considéré qu'il y avait 8 raies spectrales à démultiplexer.

Sur les figures 3A à 3D, on voit le guide plan d'entrée 28 et le guide plan de sortie 30 de ce PHASAR.

Ces guides plans 28 et 30 sont reliés par un ensemble de guides déphaseurs 32 et le guide plan d'entrée est couplé à un guide d'entrée 34, lui-même couplé à la fibre FE, tandis que le guide plan de sortie est couplé à N(=8) guides de sortie 36.

On voit aussi la lame demi-onde 37 dont est muni l'ensemble 32 (à titre d'exemple, nullement limitatif).

Comme dans le cas des figures 1A à 1D, chaque guide de sortie 36 est raccordé au dispositif de mesure par filtrage DM et donc à un coupleur CO (cas des figures 3A à 3C) ou à un interféromètre de Mach-Zehnder MZ (cas de la figure 3D).

Considérons maintenant la sensibilité de la mesure des longueurs d'onde des raies spectrales.

Les pertes d'énergie de chacun des dispositifs des figures 1A à 3D peuvent être compensées par le fait que toute l'énergie de chaque raie spectrale est analysée, contrairement à une mesure par un élément sélectif de type Fabry-Pérot par exemple qui échantillonne chaque raie (voir le document (3)).

Considérons une perte optique totale de 30 dB pour un dispositif (pertes de connexion incluses).

La plupart des sources superluminescentes continues émettent typiquement quelques mW sur quelques dizaines de nm de largeur spectrale.

Ceci correspond à une densité spectrale d'excitation de l'ordre de 1 mW/10 nm, soit 10 µW/Å.

Sachant que la largeur spectrale typique d'un réseau de Bragg transducteur est de l'ordre de 0,1 nm, la puissance renvoyée par la fibre optique externe FE est donc de -20 dBm environ (10 µW).

Ainsi, la puissance analysée au niveau de la barrette de photodétecteurs vaut -40 dBm.

**1)** Dans le cas d'un filtrage par réseaux de Bragg à périodes variables (figures 1A, 2A, 3A) la pente peut être de l'ordre de 20% par nm ce qui définit une résolution typique de l'ordre de quelques dizaines de micro-déformations ($\mu\varepsilon$).

La loi de conversion est où I1 est l'intensité lumineuse de la voie de mesure et I2 est l'intensité lumineuse de la voie de référence.

**2)** Dans le cas du filtre unique à multicouches diélectriques (figures 1B, 2B, 3B), un filtre à transition spectrale de type passe-haut ou passe-bas assure une pente de l'ordre de 2,5% par nm.

La largeur spectrale totale pour 8 transducteurs est d'environ 3x8 nm = 24 nm.

La résolution est alors de l'ordre de quelques centaines de $\mu\varepsilon$ pour chaque transducteur (voir le document (30)).

La loi de conversion est identique à celle qui est donnée plus haut pour le cas 1).

**3)** Dans le cas des figures 1C, 2C, 3C, les filtres à multicouches diélectriques peuvent être de type Fabry-Pérot à transmission spectrale passe-bande, ce qui assure une pente d'environ 20% à 25% par nm.

La précision en déformation obtenue sur la mesure d'un transducteur unique est alors de quelques dizaines de $\mu\varepsilon$.

La loi de conversion est identique à celle qui est donnée plus haut pour le cas 1).

**4)** dans le cas des figures 1D, 2D, 3D, un interféromètre de Mach-Zehnder de différence de longueurs de bras de 100 µm environ est caractérisé par une période spectrale typique de 10 nm (pour une longueur d'onde appartenant au domaine proche infrarouge).

Sur 3 nm d'évolution spectrale, la pente correspondante est d'environ 20% par nm.

Ainsi, la précision en déformation est analogue à celle qui est obtenue avec le cas 3), soit quelques dizaines

## EP 0 986 737 B1

de $\mu\epsilon$.

La loi de conversion est cette fois $T(\lambda) = \frac{I1 - I2}{I1 + I2}$ où I1 et I2 sont les deux intensités provenant respectivement des bras de sortie de l'interféromètre.

Les modes de réalisation assurant les plus fortes sensibilités correspondent aux cas 1), 3) et 4).

Le mode de réalisation le plus « flexible » en ajustement spectral correspond au cas 1) tandis que le plus simple d'un point de vue technologique correspond au cas 2), au prix d'une moindre sensibilité de mesure.

Considérons maintenant la fabrication d'un dispositif conforme à l'invention.

Afin de minimiser les pertes optiques par courbures, les rayons de courbures des guides diélectriques du dispositif sont typiquement de l'ordre de quelques cm.

Ainsi, la séparation des guides nécessite des longueurs d'interaction assez importantes (de l'ordre de 3 cm environ pour 8 sorties).

De ce fait, à titre d'exemple, la longueur utile du dispositif comprenant un démultiplexeur à réseaux de Bragg est d'environ 7 cm pour une largeur de 5 mm (en fait, le dispositif a en pratique une largeur d'environ 1 cm pour pouvoir être manipulé) tandis que les longueur et largeur utiles des dispositifs comprenant un démultiplexeur à réseau gravé ou à réseau de phase sont respectivement de 7 cm et 4 cm.

On considère maintenant la fabrication d'un dispositif conforme à l'invention sur un substrat en verre.

La technique d'intégration sur un tel substrat est bien adaptée à la réalisation des dispositifs des figures 1A à 1D.

La technique utilisée est celle de l'échange thermique d'ions de type $Na^+$, $K^+$ ou $Cs^+$, éventuellement assisté par un champ électrique.

Le principe de cette technique consiste à échanger des ions alcalins, par exemple des ions sodium $Na^+$, déjà présents dans le verre, avec d'autres ions, du type $Ag^+$ ou $Tl^+$, qui ont pour effet d'augmenter localement l'indice de réfraction du verre.

Cette technique est bien connue et l'on consultera par exemple à son sujet les documents (13) et (14).

Les pertes optiques dues à la connexion fibre-guide et à l'atténuation dans le guide ont été considérablement diminuées grâce à la technique des guides enterrés.

Cette technique consiste à faire diffuser un premier dopant dans le substrat sous champ électrique.

On obtient ainsi des guides qui sont caractérisés par des sections de dopage quasi-circulaires et par un mode conforme à celui d'une fibre monomode (il y a optimisation du recouvrement modal) et qui présentent des atténuations linéiques beaucoup plus faibles du fait de la disparition de la diffusion de surface.

Ces atténuations sont typiquement inférieures à 0,1 dB/cm.

On considère maintenant la fabrication d'un dispositif conforme à l'invention sur un substrat en silicium.

Les technologies $SiO_2$ sur Si (couches guidantes en $SiO_2$, SiON et $Si_3N_4$) sont également parfaitement adaptées à la réalisation d'un tel dispositif.

Les techniques utilisées dans ce cas sont fondées sur un dépôt en phase vapeur (Chemical Vapor Deposition) noté CVD ou un dépôt par hydrolyse à la flamme et une gravure ionique réactive pour la réalisation des motifs.

En ce qui concerne le dépôt en phase vapeur, on consultera les documents (15) et (16).

En ce qui concerne le dépôt par hydrolyse à la flamme, on consultera le document (17).

Considérons l'exemple de la technique de fabrication des guides en silice sur silicium.

A ce sujet on se reportera au document (15).

Dans ce cas, le substrat optique est une couche de silice d'épaisseur suffisante pour isoler la lumière du silicium (épaisseur de 6 $\mu$m pour une longueur d'onde de 0,8 $\mu$m et de 12 $\mu$m pour une longueur d'onde voisine de 1,3 $\mu$m ou de 1,55 $\mu$m).

La couche guidante est par exemple une couche de silice dopée au phosphore, dont l'épaisseur est de l'ordre de 2 $\mu$m à 5 $\mu$m suivant la longueur d'onde, et la couche de recouvrement, ou superstrat, est équivalente au substrat, du point de vue de l'indice optique, et a une épaisseur de l'ordre de 6 $\mu$m à 10 $\mu$m.

Un avantage important de l'optique intégrée sur silicium est la possibilité de graver simultanément des rainures en forme de U ou en forme de V pour le positionnement de fibres optiques monomodes.

A ce sujet on consultera les documents (15), (18) et (19).

Un autre avantage de l'optique intégrée sur silicium réside dans le contrôle de la pente des flancs de gravure pour limiter les réflexions parasites à l'extrémité des guides optiques, réflexions parasites qui sont cause de diaphonie.

La fabrication d'un dispositif conforme à l'invention sur un substrat semi-conducteur III-V (par exemple AsGa ou InP) est similaire à la technologie OIS. Typiquement, il s'agit de couches de 1 $\mu$m d'épaisseur InP, InGaAsP, InP obtenues par épitaxies par jets moléculaires (MBE) et gravées par gravure chimique réactive (RIE).

A ce sujet, on consultera le document (33).

Dans le cas d'un dispositif de démultiplexage à jonctions séparatrices et réseaux de Bragg, on a vu que les jonctions séparatrices étaient, de préférence, des jonctions Y.

La lumière parvenant à une jonction Y est séparée de manière égale entre les deux bras de celle-ci.

Réciproquement, la lumière apparaissant dans un seul des deux bras n'est couplée qu'à moitié dans le guide récepteur, le reste de l'énergie étant couplée dans le substrat (voir le document (20)).

Pour un démultiplexeur à 8 voies, la proportion d'énergie incidente sur la barrette de photodiodes de détection (réfléchie par le réseau de Bragg de démultiplexage) est de 3% environ de l'énergie incidente (atténuation de -15 dB).

On considère maintenant la réalisation des réseaux de Bragg de démultiplexage.

Comme on l'a vu plus haut, ces réseaux peuvent être photo-gravés ou photo-inscrits.

Des réseaux photo-inscrits à périodes variables sont décrits dans les documents (25) et (26).

Considérons la figure 8 sur laquelle sont représentées la fonction de transfert A du réseau de Bragg correspondant à la raie considérée et la fonction de transfert B d'un réseau de Bragg adjacent au précédent.

Sur cet abaque, les longueurs d'onde $\lambda$ sont portées en abscisses et exprimées en nanomètres et les puissances lumineuses P sont portées en ordonnées et exprimées en dB.

On voit également la zone C d'évolution spectrale de la raie considérée (à titre d'exemple, celle-ci vaut environ 1 nm, ce qui correspond à une contrainte maximale de 1000 $\mu\varepsilon$).

Sur la figure 8, la diaphonie x est de l'ordre de -30 dB à -40 dB et les intervalles de longueur d'onde $\Delta\lambda 1$, $\Delta\lambda 2$, $\Delta\lambda 3$, $\Delta\lambda 4$ valent respectivement 3 nm, 1 nm, 1 nm, 1nm.

On a choisi, pour chacune des raies, une largeur spectrale de démultiplexage d'environ 3 nanomètres (définie à -3 dB) prenant en compte une marge de précision de fabrication par photo-inscription, ainsi qu'une dérive thermique de $\pm 50°$C autour de la température ambiante.

L'espace spectral utile est alors d'environ 50%.

Dans le cas où la gamme de mesure est de 10000 $\mu\varepsilon$ (soit 10 nm d'évolution en longueur d'onde), la gamme totale est alors de 12 nm et l'espace spectral occupé est de 80%.

La diaphonie dépend de l'adaptation à l'extrémité des guides optiques où sont formés les réseaux de Bragg.

Typiquement, une diaphonie de -40 dB peut être atteinte en donnant, à chaque guide portant un réseau de Bragg, une extrémité en biais par rapport à l'axe de ce réseau, dans le cas de la technologie utilisant le silicium, pour que la lumière qui n'est pas réfléchie sélectivement par les réseaux passe dans le substrat sur lequel ils sont formés.

Dans le cas de la technologie utilisant le verre, pour que la lumière qui n'est pas réfléchie sélectivement passe dans le substrat, on peut y usiner des micro-trous selon un axe non perpendiculaire au guide.

Deux techniques sont utilisables pour réaliser les réseaux de Bragg de démultiplexage et les réseaux de Bragg de mesure sur le substrat plan.

La première technique est la photogravure qui est décrite dans le document (21).

Cette technique tire profit de la variation d'indice effectif induite le long du guide par gravure mécanique du superstrat très proche du coeur (sur une profondeur de 1 $\mu$m à 2 $\mu$m).

Une très mince couche de résine photosensible (« photoresist »), d'environ 70 nm d'épaisseur est appliquée au substrat, par exemple par tournette (« spin coating »), afin d'obtenir une bonne résolution de gravure.

Cette couche de résine photosensible est ensuite insolée dans le domaine visible ou proche ultraviolet (par exemple au moyen d'un laser argon à 457,9 nm comme l'enseigne le document (21) par des motifs interférentiels provenant de montages optiques semblables à ceux qui sont employés pour la photo-inscription de réseaux de Bragg.

A ce sujet, on consultera les documents (22) à (28).

Après développement, le verre est gravé par gravure ionique réactive, par exemple au moyen d'un faisceau d'argon dans une atmosphère de trifluorométhane.

Une couche d'alumine d'épaisseur 80 nm et d'indice optique plus élevé que celui de la silice est généralement déposée au dessus de la zone gravée, afin d'augmenter l'efficacité de diffraction du réseau en concentrant le champ du mode fondamental sur la zone gravée.

La deuxième technique est la photo-inscription.

A ce sujet, on consultera les documents (22) à (28).

Dans le cas de la silice dopée au germanium, le procédé de fabrication du verre inclut un recuit qui rend le verre très peu photosensible en supprimant les défauts structurels.

La technique de l'hydrogénation (recuit du verre sous atmosphère d'hydrogène ou mise en pression sous plusieurs mégapascals à température ambiante) ou la technique de la trempe à la flamme permet d'augmenter considérablement la photosensibilité des substrats de verre ou de silice sur silicium.

A ce sujet, on consultera les documents (22), (23) et (24).

La technique préférentielle de photo-inscription des réseaux de Bragg est la technique du masque de phase car elle se prête bien à des inscriptions multiples sur un substrat, selon les méthodes photolithographiques traditionnelles.

La théorie de cette technique est décrite dans de nombreux ouvrages de base (voir par exemple le document (12) p.64).

Pour sa mise en oeuvre, on réalise un masque qui se présente sous la forme d'une plaque de silice fondue (par exemple du genre de celles qui sont commercialisées par la société CORNING sous la référence Corning 7940) sur laquelle ont été gravées des stries.

Ces stries sont périodiques, de période $d = \frac{\lambda_B}{N}$ (où $\lambda_B$ représente la longueur d'onde du réseau et N représente l'indice effectif du mode fondamental guidé) et ont une profondeur telle qu'il y ait une modulation de phase de $\pi$ à la longueur d'onde d'insolation, comme l'enseigne le document (25).

Le faisceau laser d'insolation peut provenir d'un laser à argon ionisé émettant à 488 nm, dont la fréquence a été doublée (à l'intérieur de la cavité laser), afin d'émettre dans l'ultraviolet à 244 nm, ou bien d'un laser YAG-Nd dont la fréquence a été quadruplée, afin d'émettre à 266 nm.

On peut aussi utiliser un laser excimère de type KrF (émettant à 249 nm).

Le faisceau laser est alors principalement diffracté suivant deux ordres (-1 et 1) représentant chacun environ 35% de l'énergie, tandis que l'ordre zéro (qui doit être réduit au minimum en pratique) représente moins de 5% de l'énergie.

Les deux ondes cohérentes provenant de chaque ordre créent alors un schéma d'interférence de période $\Lambda$ qui produit le réseau de longueur d'onde $\lambda_B = 2.N.\Lambda = N.d$ où N est l'indice effectif du mode fondamental guidé.

La période du réseau est indépendante de la longueur d'onde d'insolation (ce qui rend la méthode utilisable avec des sources optiques à faible longueur de cohérence telles qu'un laser excimère KrF).

Les réseaux à périodes variables sont avantageusement obtenus par une succession de plusieurs réseaux de phase à pas constant.

A ce sujet, on consultera le document (26).

De tels masques de phase sont commercialisés (par exemple par les Sociétés Lasiris, Northern Photonics, QPS Tech.) pour réaliser un réseau unique.

Le masque d'insolation du composant est ainsi constitué de plusieurs de ces masques répartis sur les guides à insoler.

Ce masque est positionné sur le composant et l'ensemble (masque et composant) est déplaçable en translation sous le faisceau laser par des moyens de micro-déplacements (moteurs pas-à-pas).

La longueur typique d'un réseau à périodes variables est d'environ 5 mm à 10 mm.

Une plus grande flexibilité d'ajustement en longueur d'onde peut être envisagée en appliquant la méthode d'interférométrie à deux ondes décrite dans les documents (27) et (28).

Selon cette autre méthode, le faisceau peut provenir d'un laser à colorant dont la fréquence est doublée et qui est pompé par un laser excimère de type XeCl.

A ce sujet, on consultera le document (28).

Cette autre méthode a l'avantage de permettre l'ajustement précis des longueurs d'onde d'accord de Bragg sans modifier l'interféromètre, en ajustant très légèrement la longueur d'onde d'insolation (de 230 nm à 255 nm environ).

On considère maintenant la réalisation du dispositif de mesure par filtrage.

Dans le cas des réseaux de Bragg photo-inscrits à période variable, il s'agit de réseaux de fonction spectrale en pente comme cela est décrit dans le document (26).

Le procédé de fabrication est identique à celui qui a été précédemment décrit en ce qui concerne la réalisation des réseaux de Bragg de démultiplexage.

Dans le cas d'un filtre unique à multicouches diélectriques, pour fabriquer un tel filtre, on dépose une couche de photo-résist sur le substrat préférablement par pulvérisation (« electrospray ») et on utilise un masque pour développer une zone découverte.

Après dépôt des couches diélectriques multiples (typiquement en Si et $SiO_2$), la couche de photo-résist est dissoute, entraînant le dépôt résiduel (technique de « lift-off »).

En ce qui concerne les filtres à multicouches diélectriques différents les uns des autres, de la même façon que pour les réseaux de Bragg de démultiplexage, la largeur spectrale totale est environ 3 fois la largeur utile afin de tenir compte de la dérive thermique de la fonction spectrale.

Le procédé de fabrication est analogue à ce qui a été décrit pour le filtre unique à multicouches diélectriques et répété autant de fois qu'il y a de voies de mesure.

En ce qui concerne les interféromètres de Mach-Zehnder, de la même façon, la période spectrale d'un tel interféromètre est ajustée afin de garantir une largeur spectrale d'environ 3 fois la largeur utile.

Autour de 1300 nanomètres, la période spectrale est d'environ 11 nanomètres pour un déséquilibre de longueur de 50 $\mu$m entre les deux bras de chaque interféromètre.

D'une façon avantageuse, un interféromètre est constitué d'une jonction Y et d'un coupleur équilibré (3 dB), permettant de séparer l'énergie lumineuse en deux fois sans pertes optiques, contrairement à deux jonctions Y.

Considérons maintenant des exemples d'application du dispositif objet de l'invention.

Un tel dispositif permet de démultiplexer plusieurs raies spectrales et de convertir leurs décalages en longueur d'onde en plusieurs signaux électriques.

On indique qu'un tel dispositif peut être réalisé sur un unique substrat (en reliant le dispositif de démultiplexage au dispositif de mesure par filtrage au moyen de guides de préférence monomodes (voir les figures 1A à 3D).

Cependant, un tel dispositif peut comprendre deux substrats comme l'illustre schématiquement la figure 9.

Sur cette figure 9 on voit un premier substrat 40 sur lequel est réalisé le dispositif de démultiplexage DD et un deuxième substrat 42 sur lequel est réalisé le dispositif de mesure par filtrage DM.

Ces substrats 40 et 42 sont reliés optiquement l'un à l'autre par l'intermédiaire de fibres optiques de connexion 44 (8 fibres dans le cas où il y a 8 raies spectrales à démultiplexer).

On voit également sur la figure 9 la fibre optique externe à FE qui amène les raies spectrales à démultiplexer au dispositif de démultiplexage formé sur le substrat 40.

La figure 10 illustre schématiquement un micro-système optique destiné à mesurer des déformations ou des températures au moyen de transducteurs à réseaux de Bragg photo-inscrits.

Ce micro-système comprend une source optique 46 de large bande spectrale (qui peut être une source superfluorescente à fibre dopée à l'erbium ou une diode superluminescente).

Cette source 46 est alimentée en courant électrique par des moyens appropriés 48.

Le micro-système comprend également un coupleur équilibré à quatre voies 50 (50% de transmission sur les deux voies de sortie).

La source 46 est connectée à un bras d'entrée du coupleur 50.

L'autre bras d'entrée de ce coupleur 50 est connecté à un dispositif conforme à l'invention 52.

L'un des deux bras de sortie du coupleur 50 est laissé libre tandis que l'autre bras de sortie de ce coupleur 50 est relié à l'une des extrémités d'une fibre optique monomode sensible 54 sur laquelle ont été photo-inscrits plusieurs réseaux de Bragg transducteurs 56.

L'autre extrémité de la fibre 54 est clivée en biais.

Il est à noter que le spectre optique d'une diode superluminescente est d'allure gaussienne, de largeur spectrale typique de 30 nanomètres à 50 nanomètres environ.

On voit également sur la figure 10 une barrette de photodiodes 58 qui est couplée au dispositif de mesure par filtrage appartenant au dispositif 52 et qui fait partie de ce dispositif 52.

Cette barrette de photodiodes 58 est électriquement reliée à des moyens électroniques de traitement 60 permettant de calculer les longueurs d'onde des raies spectrales correspondant aux transducteurs 54.

On précise qu'on peut utiliser un substrat plan en silicium ou en semi-conducteur III-V suffisamment grand pour y intégrer non seulement le dispositif conforme à l'invention 52 (y compris la barrette 58) mais encore une diode superluminescente ainsi que le coupleur 50.

Les filtres multicouches ainsi que les réseaux de Bragg que peut comporter le dispositif 52 sont caractérisés par une dérive thermique de l'ordre de 0,01 nm/$\circ$C identiques à la dérive thermique d'un réseau de Bragg transducteur.

Ainsi, si tous les réseaux de Bragg (réseaux transducteurs photo-inscrits sur la fibre sensible et réseaux du dispositif conforme à l'invention) sont à la même température, les décalages spectraux se compensent exactement et aucune correction en température n'est nécessaire.

Si toutefois les réseaux de Bragg transducteurs de contraintes et le dispositif conforme à l'invention ne sont pas à la même température, il est possible de prévoir un réseau de référence en température, non soumis aux contraintes.

Le micro-système de la figure 10 s'applique à la surveillance, en temps réel, à forte bande passante (100 kHz), de plusieurs contraintes ou de plusieurs pressions appliquées à la fibre sensible incorporée dans une structure par exemple en matériau composite.

Ce micro-système est également utilisable pour effectuer des mesures de température en temps réel.

I1 est également utilisable dans les télécommunications pour démultiplexer plusieurs canaux et mesurer une information codée en longueur d'onde.

Un autre exemple d'application consiste en la connexion d'un dispositif conforme à l'invention à un réseau de capteurs-lasers comme cela est décrit dans le document (32).

Cette application est semblable à celle qui est décrite en faisant référence à la figure 10 mais en remplaçant chaque transducteur de Bragg par un capteur-laser constitué d'une fibre optique dopée par des ions Terres Rares (typiquement par des ions $Er^{3+}$) et de deux réseaux de Bragg dont l'un est transducteur et l'autre ferme la cavité du laser.

Un autre exemple d'application est le démultiplexage et la mesure de plusieurs longueurs d'onde (application de spectro-photométrie) pour les télécommunications modulées en longueur d'onde par exemple.

Le caractère robuste et de préférence intégré (quelques centimètres d'envergure sur quelques millimètres d'épaisseur) de ce dispositif le destine tout particulièrement à être inclus dans un micro-système que l'on peut incorporer dans une structure à surveiller (entre deux nappes de matériaux composites par exemple).

Un dispositif conforme à l'invention (quel que soit le type de démultiplexage utilisé) peut être rendu très peu dépendant de la polarisation de la lumière analysée, ce qui constitue un avantage supplémentaire en terme de simplicité d'utilisation pour les utilisateurs (puisqu'il n'est alors pas nécessaire d'utiliser des fibres à maintien de polarisation).

De plus, dans le cas où le démultiplexage utilise des jonctions Y et des réseaux de Bragg photo-inscrits, la grande « flexibilité » de fabrication du dispositif le rend particulièrement attractif pour une instrumentation par capteurs multisectorielle, du fait d'un ajustement aisé des longueurs d'onde d'accord de Bragg de ces réseaux photo-inscrits et du fait que le comportement de séparation en énergie des jonctions Y est indépendant des longueurs d'onde utilisées.

Revenons à la figure 1A. La lumière provenant par exemple de capteurs présents sur une ligne de mesure et amenée par la fibre optique FE parcourt un séparateur en énergie qui fournit (à titre d'exemple) 8 signaux de même caractéristique spectrale à chacune de ses sorties. Chaque sortie correspond à un bras d'une jonction séparatrice en longueur d'onde opérant en réflexion et renvoyant l'énergie filtrée dans un guide 14. Sur chacune de ces jonctions est photo-inscrit un réseau de Bragg 12 qui sépare un domaine de longueur d'onde disjoint des autres (voir figure 7) et assure la fonction de démultiplexage spectral pour chacun des capteurs présents sur la ligne de mesure. Cette jonction séparatrice peut être réalisée de deux façons.

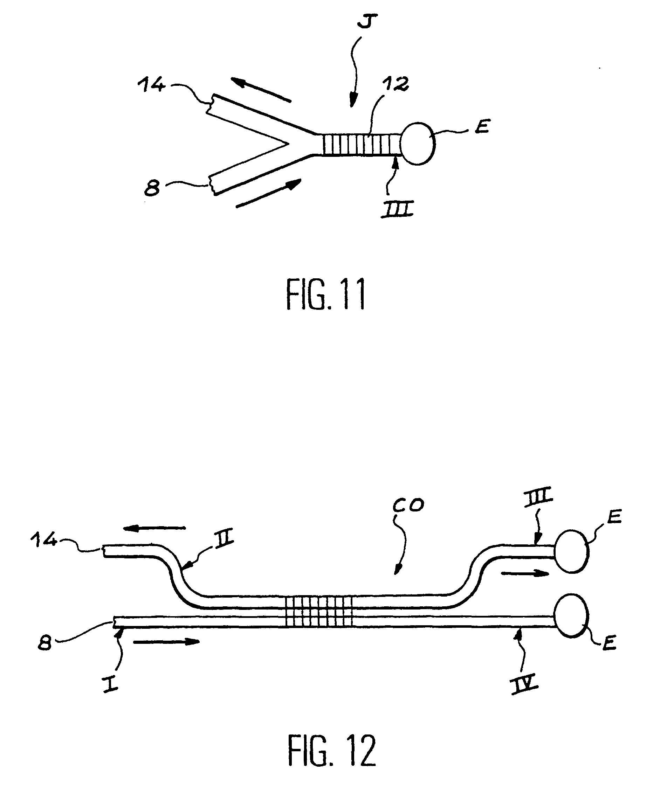

La première solution utilise une jonction Y avec un réseau de Bragg 12 (avantageusement à 100% de réflexion) photo-inscrit sur la branche d'entrée (voir la figure 11 où la jontion a la référence J). Cette solution est avantageuse en ce sens que les propriétés de guidage des jonctions Y sont très peu sensibles à la polarisation et à la longueur d'onde de la lumière. Ainsi, un seul masque peut être réalisé pour obtenir le composant ce qui rend la fabrication très flexible car seules les longueurs d'onde des réseaux de Bragg sont ajustées pour réaliser le démultiplexeur. En revanche, cette jonction Y impose une perte optique de 6 dB lors de l'opération de filtrage (c'est-à-dire que le signal va de la sortie 8 vers le guide 14).

Une deuxième solution permettant de supprimer cet inconvénient consiste à photo-inscrire simultanément chaque réseau de Bragg 12 (avantageusement à 100% de réflexion) sur les deux bras d'un coupleur CO afin de former un coupleur assisté par réseau (voir figure 12). Un tel coupleur est avantageusement choisi de façon à avoir une faible constante de couplage C de sorte qu'un seul battement est observé sur la longueur de couplage $L_c$ (c'est-à-dire C. $L_c=\pi/2$) afin de minimiser sa dépendance en longueur d'onde et en polarisation. Le principe d'un coupleur assisté par réseau est alors le suivant. La longueur de couplage, l'intervalle de couplage et les caractéristiques des guides du coupleur sont choisis afin d'obtenir un transfert total de l'énergie du port I au port couplé III, soit 100%. En présence d'un réseau (opérant en réflexion) photo-inscrit sur les deux bras, les longueurs d'onde réfléchies par le réseau de Bragg parcourent le coupleur en sens inverse et sont réfléchies au port II (comme si elles venaient du port IV symétrique du port II). Il y a alors « extraction » des signaux dont les longueurs d'onde correspondent à la longueur d'onde caractéristique du réseau de Bragg photo-inscrit. Ce comportement est décrit (à titre d'exemple) dans le document (34).

Dans les deux cas (jonction Y ou coupleur 100% assisté par réseau de Bragg), les extrémités des guides III (figure 11) et III et IV (figure 12) sont percées en biais (ce que l'on a symbolisé par des ovales E sur les figures 11 et 12) afin de supprimer les réflexions de Fresnel qui sont sources de diaphonie.

Les documents cités dans la présente description sont les suivants :

(1) W.W. Morey, UNITED TECHNOLOGY CORPORATION (USA) Distributed multiplexed optical fiber Bragg grating sensor arrangement - voir aussi US-A-4,996,419

(2) D.R. Lyons and S.M. Reich, GRUMMAN AEROSPACE CORPORATION (USA) Optical electronic multiplexing reflection sensor system - voir aussi US-A-5,191,458

(3) P. Ferdinand et al, Mine Operating Accurate STABILity Control with Optical fiber sensing and Bragg grating technology : the BRITE-EURAM STABILOS Project, OFS'94, 11-13 oct 1994, Glasgow - voir aussi J. Lightwave Technol., vol.13, n°7, 1995, pp 1303-1313

(4) J.R. Dunphy and K.P. Falkowich, UNITED TECHNOLOGY CORPORATION (USA) Multiplexed Bragg grating sensors - voir aussi US-A-5,426,297

(5) P.C. Clemens, G. Heise, R. Marz, H. Michel, A. Reichelt and H.W. Schneider, 8-Channel optical demultiplexer realized as $SiO_2$/Si flat-field spectrograph, IEEE Phot. Tech. Lett., vol.6, n°9, 1994, pp.1109-1111

(6) G. Grand, G. Palumbo, A. Fournier et P. Labeye, Réseau blazé à profil très vertical en silice sur silicium - Application au multiplexage pour communications optiques, Journées Nationales d'Optique Guidée, Besançon, 1994, pp.4-6

(7) P. Gidon, J.P. Jadot et S. Valette, Multiplexeur-démultiplexeur utilisant un réseau concave elliptique et réalisé en optique intégrée EP-A-0275795 - voir aussi US-A-4,786,133

(8) B.H. Verbeek, C.H. Henry, N.A. Olsson, N.A. Orlowsky, R.F. Kazarinov and B.H. Johnson, Integrated four-channel Mach-Zehnder Multi/demultiplexer fabricated with phosphorous doped $SiO_2$ waveguides on Si, J. Of Lightwave Technol., Vol.6, n°6, 1988, pp.1011-1015

(9) H. Takahashi, K. Oda, H. Toba and Y. Inoue, Transmission characteristics of arrayed waveguide NxN wavelength multiplexer, J. Of Lightwave Technol., vol.13, n°3, 1995, pp.447-455

(10) K. Okamoto, K. Moriwaki and S. Suzuki, Fabrication of 64x64 arrayed-waveguide grating multiplexer on silicon, Electron. Lett., vol.31, n°3, 1995, pp. 184-186

(11) V. Delisle, G. Grand, A. Fournier and P. Mottier, Reduced-size low-crosstalk PECVD silica PHASAR using widened continuous bends, 8th european conference on integrated optics, ECIO'97, Stockholm, 1997

(12) J.W. Goodman, Introduction to Fourier Optics, Mc Graw-hill

(13) S. Honkanen, Ion-exchanged glass waveguide devices for optical communications, Glass integrated optics and optical fiber devices, S. Iraj Najafi Ed., SPIE vol CR53, 1994, pp. 159-179

(14) L. Roβ, Integrated optical components in substrate glasses, Glastech. Ber., vol.62, 1989, pp.285-297

(15) S. Valette et al., Si-based integrated Optics Technologies, Solid State Tech., 1989, pp. 69-74

(16) S. Valette, S. Renard, J.P. Jadot, P. Gidon and C. Erbeia, Silicon-based Integrated Optics Technology for Optical Sensor Applications, Sensors and Act. A, 1990, pp. 1087-1091

(17) Y. Ohmori, Passive and active silica waveguides on silicon, Proc. ECOC 93, Montreux, pp.19-26

(18) W. Hunziker et al., Self-aligned flip-chip OEIC packaging technologies, Proc. ECOC 93, Montreux, pp. 84-91

(19) G. Grand et al., New method for low-cost and efficient optical connection between single-mode fibres and silica guides, Electron. Lett., Vol.27, n°1, 1991, pp.16-17

(20) M. Izutsu, Y. Nakai and T. Sueta, Operation mechanism of the single-mode optical waveguide Y junction, Opt. Lett. Vol.7, n°3, 1982, pp.136-138

(21) C.J. Rowe, I. Bennion and D.C.J. Reid, High-Reflectivity surface-relief gratings in single-mode optical fibres, IEE Proc. J., Vol.134, n°3, 1987, pp.197-202

(22) B.J. Ainslie, G.D. Maxwell and D.L. Williams, Photosensitive glass integrated optical devices, Glass integrated optics and optical fiber devices, S. Iraj Najafi ed., SPIE vol CR53, 1994, pp. 235-249

(23) G.D. Maxwell, R. Kashyap and B.J. Ainslie, UV written 1.5 µm reflection filters in single mode planar silica guides, Electron. Lett., Vol.28, n°22, 1992, p. 2107-2108

(24) K.O. Hill, F. Bilodeau, B. Malo, J. Albert, D.C. Johnson, Y. Hibino, M. Abe and M. Kawachi, Photosensitivity of optical fibre and silica on silica/silicon waveguides, Opt. Lett., vol.18, n°12, 1993, pp.953-955

(25) K.O. Hill, B. Malo, F. Bilodeau, D.C. Johnson and J. Albert, Bragg gratings fabricated in monomode photosensitive optical fiber by UV exposure through a phase mask, Appl. Phys. Lett., vol.62, n°10, 1993, pp. 1035-1037

(26) R. Kashyap, P.F. McKee, R.J. Campbell and D.L. Williams, novel method of producing all fibre photo-induced chirped gratings, Electron. Lett., vol.30, n°12, 1994, pp.996-997

(27) M.C. Farries, K. Sugden, D.C.J. Reid, I. Bennion, A. Molony and M.J. Goodwin, Very broad reflection bandwidth (44 nm) chirped fibre gratings and narrow bandpass filters produced by the use of an amplitude mask, Electron. Lett., Vol.30, n°11, 1994, pp.891-892

(28) G. Meltz, W.W. Morey and W.H. Glenn, Formation of Bragg gratings in optical fibers by a transverse holographic method, Opt. Lett., vol.14, n°15, 1989, pp.823-825

(29) R. Kashyap, G.D. Maxwell and B.J. Ainslie, Laser trimmed four-port bandpass filter fabricated in single-mode photosensitive Ge-doped planar waveguide, IEEE Photon. Technol. Lett., vol.5, 1993, pp.191-194

(30) S.M. Melle, K. Liu and R.M. Measures, A passive wavelength demodulation system for guided-wave Bragg grating sensors, IEEE Phot. Tech. Lett., vol.4, n°5, 1992, pp.516-518

(31) M.A. Davis and A.D. Kersey, All-fibre Bragg grating strain-sensor demodulation technique using a wavelength division coupler, Electron. Lett. Vol.30, n°1, 1994, pp.75-77

(32) G.A. Ball, W.W. Morey and P.K. Chao, Single and multipoint fiber laser sensors, IEEE Phot. Tech. Lett., vol. 5, n°2, 1993, pp.267-270

(33) R. Mestric, M. Renaud, B. Martin and F. Gaborit, Up to 16 Channel Phased-array wavelength demultiplexers on InP with 20dB crosstalk, Proc. ECIO, Stockholm 1997, pp.264-267

(34) Ingolf Baumann et al., Compact all-fiber add-drop multiplexer using fiber Bragg gratings, IEEE Phot. Tech. Lett., vol.8, n°10, 1996, pp.1331-1333.

**Revendications**

1. Dispositif de lecture de raies spectrales qui sont contenues dans un spectre optique et sont susceptibles de fluctuer respectivement dans des domaines spectraux déterminés, ce dispositif étant **caractérisé en ce qu'**il comprend :

   - un dispositif (DD) de démultiplexage en longueur d'onde de ces raies spectrales, ce dispositif de démultiplexage ayant une entrée (4) destinée à recevoir le spectre optique et des sorties (14) destinées à fournir respectivement les raies spectrales démultiplexées,
   - un dispositif (DM) de mesure, par filtrage, des longueurs d'onde respectives des raies spectrales démultiplexées, comprenant, pour chacune de ces raies, une voie de mesure (VM) munie d'un filtre et une voie de référence (VR), et
   - des moyens (MP) de photodétection, pour chaque raie spectrale, des intensités lumineuses respectivement transmises par les voies de mesure et de référence correspondantes, de manière à pouvoir déterminer la longueur d'onde de cette raie en calculant le rapport des intensités ainsi détectées.

2. Dispositif selon la revendication 1, dans lequel le dispositif de démultiplexage (DD) est un dispositif de démultiplexage à réseau gravé (20).

3. Dispositif selon la revendication 1, dans lequel le dispositif de démultiplexage (DD) est un dispositif de démultiplexage à réseau de micro-guides (26).

4. Dispositif selon la revendication 1, dans lequel le dispositif de démultiplexage (DD) comprend :

   - un séparateur en énergie (2a, 2b, 2c), ayant une entrée (4), qui est destinée à recevoir le spectre optique, et une pluralité de sorties (8) qui sont aptes à fournir respectivement des fractions de l'énergie lumineuse du spectre optique, et
   - une pluralité de réflecteurs de lumière sélectifs en longueur d'onde (12) qui sont respectivement reliés aux sorties (8), chaque réflecteur de lumière sélectif en longueur d'onde ayant une bande passante en longueur d'onde qui contient le domaine spectral associé à l'une des raies et réfléchissant donc seulement cette raie, chaque réflecteur sélectif étant relié à un guide d'onde optique (14) destiné à propager la raie réfléchie par ce réflecteur.

5. Dispositif selon la revendication 4, dans lequel le séparateur en énergie est un ensemble de jonctions séparatrices (2a, 2b, 2c) montées en cascade.

6. Dispositif selon l'une quelconque des revendications 4 et 5, dans lequel les réflecteurs sélectifs comprennent des réseaux de Bragg.

7. Dispositif selon la revendication 6, dans lequel les réseaux de Bragg (12) sont photo-inscrits ou photo-gravés et sont des réseaux à périodes variables ou à période fixe avec une réflectivité maximale et une réponse spectrale élargie par photo-inscription à très forte fluence.

**8.** Dispositif selon l'une quelconque des revendications 1 à 7, dans lequel le filtre de chaque voie de mesure est un réseau de Bragg à période variable (RB).

**9.** Dispositif selon l'une quelconque des revendications 1 à 7, dans lequel les filtres respectivement associés aux voies de mesure sont des filtres à multicouches diélectriques (FM) différents les uns des autres.

**10.** Dispositif selon l'une quelconque des revendications 1 à 7, dans lequel les filtres respectivement associés aux voies de mesure sont des filtres à multicouches diélectriques (FU) identiques les uns aux autres.

**11.** Dispositif selon l'une quelconque des revendications 1 à 7, dans lequel le filtre de chaque voie de mesure est un interféromètre de Mach-Zehnder (MZ).

**12.** Dispositif selon l'une quelconque des revendications 1 à 11, dans lequel le dispositif de démultiplexage (DD) et le dispositif de mesure par filtrage (DM) sont respectivement intégrés sur deux substrats (40, 42) qui sont reliés par l'intermédiaire de fibres optiques (44) destinées à transmettre les raies démultiplexées depuis le dispositif de démultiplexage jusqu'au dispositif de mesure par filtrage.

**13.** Dispositif selon l'une quelconque des revendications 1 à 11, dans lequel le dispositif de démultiplexage (DD) et le dispositif de mesure par filtrage (DM) sont intégrés sur un même substrat (S).

**14.** Dispositif selon l'une quelconque des revendications 12 et 13, dans lequel chaque substrat (S, 40, 42) est en verre ou en silicium ou en semiconducteur III-V.

**15.** Dispositif selon l'une quelconque des revendications 1 à 11, dans lequel le dispositif de démultiplexage (DD), le dispositif de mesure par filtrage (DM) et les moyens de photodétections (MP) sont intégrés sur un même substrat en silicium ou en semiconducteur III-V.

**16.** Dispositif selon l'une quelconque des revendications 1 à 15, comprenant en outre une fibre optique (FE) qui est optiquement couplée à l'entrée (4) du dispositif de démultiplexage (DD) et qui est destinée à amener le spectre optique à cette entrée.

**Patentansprüche**

**1.** Vorrichtung zum Lesen von Spektrallinien, die in einem optischen Spektrum enthalten sind und jeweils in bestimmten Spektralbereichen fluktuieren können, wobei diese Vorrichtung **dadurch gekennzeichnet ist, dass** sie umfasst:

- eine Wellenlängen-Demultiplexing-Einrichtung (DD) dieser Spektrallinien, wobei diese Demultiplexing-Einrichtung einen Eingang (4) zum Empfangen des optischen Spektrums und Ausgänge (14) zum Liefern der jeweiligen demultiplexierten Spektrallinien hat,
- eine Einrichtung (DM) zum Messen - durch Filterung - der jeweiligen Wellenlängen der demultiplexierten Spektrallinien, für jede dieser Linien einen mit einem Filter versehenen Messkanal (VM) und einem Bezugskanal (VR) umfassend, und
- Fotodetektionseinrichtungen (MP) - für jede Spektrallinie - der jeweils durch den Mess- und den Bezugskanal übertragenen Lichtintensitäten, um die Wellenlänge dieser Linie bestimmen zu können, indem das Verhältnis der derart detektierten Intensitäten berechnet wird.

**2.** Vorrichtung nach Anspruch 1, bei der die Demultiplexing-Einrichtung (DD) eine Demultiplexing-Einrichtung mit geätztem Gitter (20) ist.

**3.** Vorrichtung nach Anspruch 1, bei der die Demultiplexing-Einrichtung (DD) eine Demultiplexing-Einrichtung mit Mikroleitergitter (26) ist.

**4.** Vorrichtung nach Anspruch 1, bei der die Demultiplexing-Einrichtung (DD) umfasst:

- einen Energieseparator (2a, 2b, 2c) mit einem Eingang (4), dazu bestimmt das optische Spektrum zu empfangen, und einer Vielzahl von Ausgängen (8), fähig jeweils Anteile der Lichtenergie des optischen Spektrums zu liefern, und

- eine Vielzahl von wellenlängen-selektiven Lichtreflektoren (12), die jeweils mit den Ausgängen (8) verbunden sind, wobei jeder wellenlängen-selektive Lichtreflektor ein Wellenlängen-Durchlassband hat, das den Spektralbereich enthält, der mit einer der Linien assoziiert ist und folglich nur diese Linie reflektiert, und jeder selektive Reflektor mit einem Lichtwellenleiter (14) verbunden ist, der der Fortpflanzung bzw. Ausbreitung der durch diesen Reflektor reflektierten Linie dient.

5. Vorrichtung nach Anspruch 4, bei der der Energieseparator ein kaskadenförmiges System von Separationsverbindungen (2a, 2b, 2c) ist.

6. Vorrichtung nach einem der Ansprüche 4 und 5, bei der die selektiven Reflektoren Bragg-Gitter umfassen.

7. Vorrichtung nach Anspruch 6, bei der die Bragg-Gitter (12) fotoinduziert oder fotogeätzt sind und Gitter mit variablen Perioden oder festen Perioden sind, mit einer maximalen Reflektivität und einem durch Fotoinduktion mit sehr starker Fluenz verbreiterten Spektralverhalten.

8. Vorrichtung nach einem der Ansprüche 1 bis 7, bei der das Filter jedes Messkanals ein Bragg-Gitter (RB) mit variabler Periode (RB) ist.

9. Vorrichtung nach einem der Ansprüche 1 bis 7, bei der die den Messkanälen jeweils zugeordneten Filter (FM) Filter mit untereinander verschiedenen dielektrischen Multischichten sind.

10. Vorrichtung nach einem der Ansprüche 1 bis 7, bei der die den Messkanälen jeweils zugeordneten Filter (FU) Filter mit untereinander gleichen dielektrischen Multischichten sind.

11. Vorrichtung nach einem der Ansprüche 1 bis 7, bei der das Filter jedes Messkanals ein Zehnder-Interferometer (MZ) ist.

12. Vorrichtung nach einem der Ansprüche 1 bis 11, bei der die Demultiplexing-Einrichtung (DD) und die Filterungs-Messeinrichtung (DM) jeweils auf zwei Substraten (40, 42) integriert sind, die durch optische Fasern (44) miteinander verbunden sind, die dazu dienen, die demultiplexierten Linien von der Demultiplexing-Einrichtung zu der Filterungs-Messeinrichtung zu übertragen.

13. Vorrichtung nach einem der Ansprüche 1 bis 11, bei der die Demultiplexing-Einrichtung (DD) und die Filterungs-Messeinrichtung (DM) auf einem selben Substrat (S) integriert sind.

14. Vorrichtung nach einem der Ansprüche 12 und 13, bei der jedes Substrat (S, 40, 42) durch Glas oder Silicium oder einen III-V-Halbleiter gebildet wird.

15. Vorrichtung nach einem der Ansprüche 1 bis 11, bei der die Demultiplexing-Einrichtung (DD), die Filterungs-Messeinrichtung (DM) und die Fotodetektionseinrichtungen (MP) auf einem selben Silicium- oder III-V-Halbleiter-Substrat integriert sind.

16. Vorrichtung nach einem der Ansprüche 1 bis 15, das außerdem eine optische Faser (FE) umfasst, die optische mit dem Eingang (4) der Demultiplexing-Einrichtung (DD) gekoppelt ist und dazu dient, das optische Spektrum zu diesem Eingang zu übertragen.

**Claims**

1. A device for reading spectral lines which are contained in an optical spectrum and are able to fluctuate respectively in given spectral regions, this device being **characterised in that** it comprises:

- a device (DD) for demultiplexing these spectral lines in terms of wavelength, this demultiplexing device having an input (4) intended to receive the optical spectrum and outputs (14) intended to supply respectively the demultiplexed spectral lines,
- a device (DM) for measuring, by filtering, the respective wavelengths of the demultiplexed spectral lines, comprising, for each of these lines, a measuring channel (VM) provided with a filter and a reference channel (VR), and
- means (MP) of photodetection, for each spectral line, of the light intensities respectively transmitted by the corresponding measuring and reference channels, so as to be able to determine the wavelength of this line by calculating the ratio of the intensities thus detected.

2. A device according to Claim 1, in which the demultiplexing device (DD) is an engraved network demultiplexing device (20).

3. A device according to Claim 1, in which the demultiplexing device (DD) is a microguide network demultiplexing device (26).

4. A device according to Claim 1, in which the demultiplexing device (DD) comprises:

- an energy separator (2a, 2b, 2c), having an input (4), which is intended to receive the optical spectrum, and a plurality of outputs (8) which are capable of supplying respectively fractions of the light energy of the optical spectrum, and
- a plurality of wavelength-selective light reflectors (12) which are respectively connected to the outputs (8), each wavelength-selective light reflector having a wavelength passband which contains the spectral region associated with one of the lines and therefore reflecting only this line, each selective reflector being connected to an optical wave guide (14) intended to propagate the line reflected by this reflector.

5. A device according to Claim 4, in which the energy separator is a set of cascaded separating junctions (2a, 2b, 2c).

6. A device according to either of the Claims 4 and 5, in which the selective reflectors comprise Bragg gratings.

7. A device according to Claim 6, in which the Bragg gratings (12) are photo-inscribed or photoengraved and are chirped or fixed-period networks with a maximum reflectivity and a spectral response broadened by very high flux photo-inscription.

8. A device according to any one of the Claims 1 to 7, in which the filter of each measuring channel is a chirped Bragg grating (RB).

9. A device according to any one of Claims 1 to 7, in which the filters respectively associated with the measuring channels are dielectric multilayer filters (FM) different from one another.

10. A device according to any one of Claims 1 to 7, in which the filters respectively associated with the measuring channels are dielectric multilayer filters (FU) identical to one another.

11. A device according to any one of Claims 1 to 7, in which the filter of each measuring channel is a Mach-Zehnder interferometer (MZ).

12. A device according to any one of Claims 1 to 11, in which the demultiplexing device (DD) and the device for measuring by filtering (DM) are respectively integrated on two substrates (40, 42) which are connected by means of optical fibres (44) intended to transmit the demultiplexed lines from the demultiplexing device to the device for measuring by filtering.

13. A device according to any one of Claims 1 to 11, in which the demultiplexing device (DD) and the device for measuring by filtering (DM) are integrated on one and the same substrate (S).

14. A device according to either one of Claims 12 and 13, in which each substrate (S, 40, 42) is made of glass or silicon or III-V semiconductor.

15. A device according to any one of Claims 1 to 11, in which the demultiplexing device (DD), the device for measuring by filtering (DM) and the photodetection means (MP) are integrated on one and the same substrate made of silicon or III-V semiconductor.

16. A device according to any one of Claims 1 to 15, also comprising an optical fibre (FE) which is optically coupled to the input (4) of the demultiplexing device (DD) and which is intended to convey the optical spectrum to this input.

FIG.1A

FIG. 1 B

FIG. 1 C

FIG. 1 D

FIG. 2 A

FIG. 2B

FIG. 2C

FIG. 2D

FIG. 3 A

FIG. 3 B

FIG. 3 C

FIG. 3 D

FIG. 4

FIG. 5

FIG. 7

FIG. 8

FIG. 6A

FIG. 6B

FIG. 6C

FIG. 6D

EP 0 986 737 B1

FIG. 9

FIG. 10

FIG. 11

FIG. 12